# EUROPEAN PATENT APPLICATION

(11) **EP 4 648 539 A1**
(43) Date of publication of application: **12.11.2025**
(21) Application number: 23932803.2
(22) Date of filing: 24.11.2023
(51) Int. Cl.: H04W 76/10, H04W 36/00

(54) **CALL METHOD AND TERMINAL**

(30) Priority: 14.04.2023 CN 202310456056
(71) Applicant: Honor Device Co., Ltd., Shenzhen, Guangdong 518040 (CN)
(72) Inventor: LI, Haibo, Shenzhen, Guangdong 518040 (CN); XUE, Chao, Shenzhen, Guangdong 518040 (CN)
(74) Representative: Isarpatent
(86) International application number: PCT/CN2023/134089
(87) International publication number: WO 2024/212532

(57) **Abstract**

This application provides a call method and a terminal, and relates to the field of communication technologies. In the method, during a call process between a first terminal and a second terminal, when signal quality of a second communication network is higher than signal quality of a first communication network and a second configuration parameter of a first bearer channel corresponding to the second communication network is invalid or does not exist, the first terminal maintains a connection with the first communication network through a first network device, to prevent the first terminal from switching to the second communication network to prevent the call from dropping.

## Description

This application claims priority to Chinese Patent Application No. 202310456056.7, filed with the China National Intellectual Property Administration on April 14, 2023 and entitled "CALL METHOD AND TERMINAL", which is incorporated herein by reference in its entirety.

### TECHNICAL FIELD

This application relates to the field of communication technologies, and in particular, to a call method and a terminal.

### BACKGROUND

In a process in which mobile communication operators gradually build the 5th generation (5th generation, 5G) stand alone (stand alone, SA), there is still a problem of an imperfect SA function of a 5G network. For example, when a terminal device in an SA mode calls or in a call process, there is a problem of a terminal's abnormal call due to a network failure or the terminal.

### SUMMARY

Embodiments of this application provide a call method and a terminal, to resolve a problem of call dropping between a first terminal and a second terminal during a call.

To achieve the above objectives, the following technical solutions are used in embodiments of this application.

According to a first aspect, a call method is provided. The call method includes: A first terminal is connected to a first network device through a first communication network; the first terminal receives a first indication message sent by the first network device, where the first indication message includes a first target configuration parameter of a first bearer channel, and the first bearer channel is used for transmitting signalling between the first terminal and a second terminal during a call or in a call process.

The first terminal uses a first configuration parameter of a first bearer channel corresponding to the first communication network to establish a call connection with the second terminal. During the call process between the first terminal and the second terminal, when signal quality of the second communication network is higher than signal quality of the first communication network and a second configuration parameter of a first bearer channel corresponding to the second communication network is invalid or does not exist, the first terminal maintains a connection with the first communication network through the first network device.

That a second configuration parameter of a first bearer channel corresponding to the second communication network is invalid includes: The first target configuration parameter of the first bearer channel includes a second configuration parameter of a first bearer channel corresponding to a mapped second communication network and the second configuration parameter is invalid.

That a second configuration parameter of a first bearer channel corresponding to the second communication network does not exist includes: The first target configuration parameter of the first bearer channel does not include a second configuration parameter of a first bearer channel corresponding to a mapped second communication network.

In conclusion, in the solutions in this application, during the call process between the first terminal and the second terminal, when the signal quality of the second communication network is higher than the signal quality of the first communication network and a second configuration parameter of a first bearer channel corresponding to the second communication network is invalid or does not exist, the first terminal maintains the connection with the first communication network through the first network device, to prevent the first terminal from switching to the second communication network to prevent the call from dropping.

In an implementation of the first aspect, that the first terminal maintains a connection with the first communication network through the first network device includes: The first terminal refrains from reporting a measurement event to the first network device, and maintains the connection with the first communication network through the first network device, where the measurement event indicates that the signal quality of the second communication network is higher than the signal quality of the first communication network; or
the first terminal reports the measurement event to the first network device; the first terminal receives a handover/redirection indication message from the first network device; and the first terminal ignores the handover/redirection indication message and maintains the connection with the first communication network through the first network device, where the handover/redirection indication message indicates the first terminal to switch/redirect to the second communication network.

Optionally, the first terminal ignores the handover/redirection indication message as that the first terminal does not respond to the handover/redirection indication message, or the first terminal does not comply with the handover/redirection indication message.

In this way, the first terminal refrains from reporting the measurement event to the first network device, or the first terminal ignores the handover/redirection indication message, to prevent the first terminal from switching to the second communication network, to prevent the call from dropping.

In an implementation of the first aspect, before the first terminal calls the second terminal for a call, the call method further includes: The first terminal sends a first release request to the first network device for requesting to delete the first target configuration parameter of the first bearer channel; and the first terminal sends a first request to the first network device for requesting to obtain a second target configuration parameter of the first bearer channel.

If the first terminal does not obtain the second target configuration parameter of the first bearer channel, during the call process between the first terminal and the second terminal, when the signal quality of the second communication network is higher than the signal quality of the first communication network and the second configuration parameter of the first bearer channel corresponding to the second communication network is invalid or does not exist, the first terminal stores the connection with the first communication network through the first network device.

In this way, before the first terminal initiates a call to the second terminal, the first terminal may attempt to obtain the second target configuration parameter of the first bearer channel, and it is possible to ensure that the call between the first terminal and the second terminal is normal with a high probability. If the first terminal does not obtain the second target configuration parameter of the first bearer channel, during the call process between the first terminal and the second terminal, the first terminal maintains the connection with the first communication network through the first network device, to prevent from switching to the second communication network, and prevent the call from dropping.

In an implementation of the first aspect, if the first terminal obtains the second target configuration parameter of the first bearer channel, the call method further includes: The second target configuration parameter of the first bearer channel includes a third configuration parameter of the first bearer channel corresponding to the first communication network, and the first terminal uses the third configuration parameter of the first bearer channel corresponding to the first communication network to establish the call connection with the second terminal.

During the call process between the first terminal and the second terminal, when signal quality of the second communication network is higher than signal quality of the first communication network and a fourth configuration parameter of a first bearer channel corresponding to the second communication network is invalid or does not exist, the first terminal stores the connection with the first communication network through the first network device.

That a second target configuration parameter of a first bearer channel corresponding to the second communication network is invalid includes: The second target configuration parameter of the first bearer channel includes a fourth configuration parameter of the first bearer channel corresponding to the mapped second communication network and the fourth configuration parameter is invalid.

That a configuration parameter of a first bearer channel corresponding to the second communication network does not exist includes: The second target configuration parameter of the first bearer channel does not include a fourth configuration parameter of the first bearer channel corresponding to the mapped second communication network.

In this way, when the first terminal obtains the second target configuration parameter of the first bearer channel, but a fourth configuration parameter of the first bearer channel corresponding to the second communication network is invalid or does not exist, during the call process between the first terminal and the second terminal, to prevent from switching to the second communication network, so as to prevent the call from dropping.

In an implementation of the first aspect, if the first terminal does not obtain the second target configuration parameter of the first bearer channel, including: The first terminal keeps sending a first request to the first network device; or the first terminal sends a first request to the first network device, and does not receive a first accept message sent by the first network device, including the second target configuration parameter of the first bearer channel, before the first terminal initiates a call to the second terminal.

In an implementation of the first aspect, the call method further includes: After the call between the first terminal and the second terminal ends, the first terminal re-establishes a connection with the first communication network through the first network device, and re-establishes a configuration parameter of the first bearer channel.

In this way, when the first terminal and the second terminal have a call next time, it is possible to ensure that the call is normal with a high probability.

In an implementation of the first aspect, the first communication network is a 5G network, and the second communication network is a long-term evolved LTE network. Before the first terminal calls the second terminal, the call method further includes: If the first terminal does not enable a voice over new radio VoNR function, the first terminal enables the VoNR function and sends a network capability message to the first communication network, where the network capability message indicates that the first terminal supports the VoNR function; and the first terminal calls the second terminal by using a VoNR technology.

In this way, when the first terminal initiates a call to the second terminal, it is possible to ensure that the call is successful.

In an implementation of the first aspect, that the first terminal uses the first configuration parameter of the first bearer channel corresponding to the first communication network to establish the call connection with the second terminal includes: The first terminal uses the first configuration parameter of the first bearer channel corresponding to the first communication network to establish the call connection with the second terminal when the VoNR function enables.

In an implementation of the first aspect, the first indication message is a PDU session modification command.

In an implementation of the first aspect, the first bearer channel is an internet protocol multimedia subsystem IMS default bearer channel, and the first target configuration parameter of the first bearer channel includes one or more of an access point name APN, a data network name DNN, a PDU session ID, an evolved packet system EPS bearer identity, a 5G quality of service identifier, and an LTE quality of service identifier.

In an implementation of the first aspect, a networking mode of the first network device is standalone SA.

According to a second aspect, a call method is provided. The call method includes: A first terminal is connected to a first network device through a first communication network; the first terminal receives a first indication message sent by the first network device, where the first indication message includes a first target configuration parameter of a first bearer channel, and the first bearer channel is used for transmitting signalling between the first terminal and the second terminal during a call or in a call process; and the first target configuration parameter of the first bearer signal includes a first configuration parameter of a first bearer channel corresponding to the first communication network and a second configuration parameter of a first bearer channel corresponding to a mapped second communication network.

When the second configuration parameter of the first bearer channel corresponding to the second communication network exists and is valid, the first terminal uses the first configuration parameter of the first bearer channel corresponding to the first communication network to establish a call connection with the second terminal.

The first terminal receives a second indication message sent by the first network device, where the second indication message includes a configuration parameter of a second bearer channel, and the second bearer channel is used for transmitting multimedia data between the first terminal and the second terminal during the call process.

During the call process between the first terminal and the second terminal, when signal quality of the second communication network is higher than signal quality of the first communication network and a sixth configuration parameter of a second bearer channel corresponding to the second communication network is invalid or does not exist, the first terminal maintains a communication connection with the first communication network through the first network device.

That a sixth configuration parameter of a second bearer channel corresponding to the second communication network is invalid includes: Configuration parameters of the second bearer channel include a fifth configuration parameter of a second bearer channel corresponding to the first communication network and a sixth configuration parameter of a second bearer channel corresponding to a mapped second communication network, and the sixth configuration parameter of the second bearer channel corresponding to the second communication network is invalid.

That a sixth configuration parameter of a second bearer channel corresponding to the second communication network does not exist includes: Configuration parameters of the second bearer channel include the fifth configuration parameter of the second bearer channel corresponding to the first communication network, and do not include the sixth configuration parameter of the second bearer channel corresponding to the mapped second communication network.

In conclusion, in the solutions in this application, during the call process between the first terminal and the second terminal, when the signal quality of the second communication network is higher than the signal quality of the first communication network and the sixth configuration parameter of the second bearer channel corresponding to the second communication network is invalid or does not exist, the first terminal maintains a communication connection with the first communication network through the first network device, to prevent from switching to the second communication network to prevent the call from dropping.

In an implementation of the second aspect, that the first terminal maintains a connection with the first communication network through the first network device includes: The first terminal refrains from reporting a measurement event to the first network device, and maintains the connection with the first communication network through the first network device, where the measurement event indicates that the signal quality of the second communication network is higher than the signal quality of the first communication network; or
the first terminal reports the measurement event to the first network device; the first terminal receives a handover/redirection indication message from the first network device; and the first terminal ignores the handover/redirection indication message and maintains the connection with the first communication network through the first network device, where the handover/redirection indication message indicates the first terminal to switch/redirect to the second communication network.

In this way, the first terminal refrains from reporting the measurement event to the first network device, or the first terminal ignores the handover/redirection indication message, to prevent the first terminal from switching to the second communication network, to prevent the call from dropping.

In an implementation of the second aspect, the call method further includes: After the call between the first terminal and the second terminal ends, the first terminal re-establishes a connection with the first communication network through the first network device, and re-establishes a configuration parameter of the first bearer channel.

In this way, when the first terminal and the second terminal have a call next time, it is possible to ensure that the call is normal with a high probability.

According to a third aspect, a call method is provided. The call method includes: A first terminal is connected to a first network device through a first communication network; the first terminal receives a first indication message sent by the first network device, where the first indication message includes a first target configuration parameter of a first bearer channel, and the first bearer channel is used for transmitting signalling between the first terminal and a second terminal during a call or in a call process.

When a second configuration parameter of a first bearer channel corresponding to the second communication network is invalid or does not exist, before the first terminal calls the second terminal for a call, the first terminal obtains a second target configuration parameter of the first bearer channel, where the first bearer channel is used for transmitting the signalling of the first terminal and the second terminal during the call or in the call process.

That a second configuration parameter of a first bearer channel corresponding to the second communication network is invalid includes: First target configuration parameters of the first bearer channel include a first configuration parameter of a first bearer channel corresponding to the first communication network and a second configuration parameter of a first bearer channel corresponding to a mapped second communication network, and the second configuration parameter of the first bearer channel corresponding to the second communication network is invalid.

That a second configuration parameter of a first bearer channel corresponding to the second communication network does not exist includes: First target configuration parameters of the first bearer channel include a first configuration parameter of a first bearer channel corresponding to the first communication network, and do not include a second configuration parameter of a first bearer channel corresponding to the second communication network.

During the call process between the first terminal and the second terminal, when signal quality of the second communication network is higher than signal quality of the first communication network and a fourth configuration parameter of the first bearer channel corresponding to the second communication network is valid, the first terminal establishes a communication connection with the second communication network through the second network device.

That a fourth configuration parameter of the first bearer channel corresponding to the second communication network is valid includes: The second target configuration parameter of the first bearer channel includes a third configuration parameter of a first bearer channel corresponding to the first communication network and a fourth configuration parameter of a first bearer channel corresponding to a mapped second communication network, and the fourth configuration parameter of the first bearer channel corresponding to the second communication network is valid.

In conclusion, in the solutions in this application, before the first terminal calls the second terminal for a call, the first terminal may re-obtain the second target configuration parameter of the first bearer channel. During the call process between the first terminal and the second terminal, when the signal quality of the second communication network is higher than the signal quality of the first communication network and the fourth configuration parameter of the first bearer channel corresponding to the second communication network is valid, the first terminal establishes a communication connection with the second communication network through the second network device, that is, the first terminal switches to the second communication network, and the call may be normal.

According to a fourth aspect, a terminal is provided. The terminal has the function of implementing the call method in any one of the first aspect, or the function of implementing the call method in any one of the second aspect, or the function of implementing the call method in any one of the third aspect. The function may be implemented by hardware, or may be implemented by hardware executing corresponding software. The hardware or the software includes one or more modules corresponding to the function.

According to a fifth aspect, a terminal is provided, including: a processor and a memory, where the memory is used to store computer execution instructions, and when the terminal runs, the processor executes the computer execution instructions stored in the memory to enable the terminal to perform the call method in any of the first aspect, or to perform the call method in any of the second aspect, or to perform the call method in any of the third aspect.

According to a sixth aspect, a terminal is provided, including a processor. The processor is configured to perform, after being coupled to a memory and reading instructions in the memory, the call method according to any one of the first aspect, the call method according to any one of the second aspect, or the call method according to any one of the third aspect.

According to a seventh aspect, a chip system is provided, applied to a terminal. The chip system includes: one processor and an interface, where the interface is used for receiving instructions and transmitting the instructions to at least one processor; the at least one processor runs the instructions to enable the terminal to perform the call method according to any one of the first aspect, or perform the call method according to any one of the second aspect, or perform the call method according to any one of the third aspect.

Optionally, the processor may be a modem (Modem) and/or an application processor (application processor, AP).

According to an eighth aspect, a computer-readable storage medium is provided. The computer-readable storage medium stores instructions. When the instructions are run on a computer, the computer is enabled to perform the call method according to any one of the first aspect, the call method according to any one of the second aspect, or the call method according to any one of the third aspect.

According to a ninth aspect, a computer program product including instructions is provided. When the instructions are run on a computer, the computer is enabled to perform the call method according to any one of the first aspect, the call method according to any one of the second aspect, or the call method according to any one of the third aspect.

For technical effects of any one of the designs in the fourth aspect to the ninth aspect, refer to the technical effects of different designs in the first aspect to the third aspect. Details are not described herein again.

### BRIEF DESCRIPTION OF THE DRAWING

FIG. 1 is a schematic diagram of a structure of a communication system according to an embodiment of this application;
FIG. 2 is a schematic flowchart 1 of an abnormal call scenario according to an embodiment of this application;
FIG. 3 is a schematic flowchart 2 of an abnormal call scenario according to an embodiment of this application;
FIG. 4 is a diagram of an interface of an abnormal call scenario according to an embodiment of this application;
FIG. 5 is a schematic flowchart 3 of an abnormal call scenario according to an embodiment of this application;
FIG. 6 is a schematic flowchart 1 of a call method according to an embodiment of this application;
FIG. 7 is a schematic flowchart 2 of a call method according to an embodiment of this application;
FIG. 8 is a schematic flowchart 3 of a call method according to an embodiment of this application;
FIG. 9 is a schematic flowchart 4 of a call method according to an embodiment of this application;
FIG. 10 is a schematic flowchart 5 of a call method according to an embodiment of this application;
FIG. 11 is a schematic flowchart 6 of a call method according to an embodiment of this application;
FIG. 12 is a schematic flowchart 7 of a call method according to an embodiment of this application;
FIG. 13 is a schematic flowchart 4 of an abnormal call scenario according to an embodiment of this application;
FIG. 14 is a schematic flowchart 5 of an abnormal call scenario according to an embodiment of this application;
FIG. 15 is a schematic flowchart 8 of a call method according to an embodiment of this application;
FIG. 16 is a diagram of a hardware structure of a terminal according to an embodiment of this application;
FIG. 17 is a diagram of a software framework of a terminal according to an embodiment of this application; and
FIG. 18 is a diagram of a structure of a chip system according to an embodiment of this application.

### DETAILED DESCRIPTION OF EMBODIMENTS

In the descriptions of the embodiments of this application, unless otherwise specified, "/" means "or". For example, A/B may represent A or B. In this specification, "and/or" is merely an association relationship for describing associated objects and represents that three relationships may exist. For example, "A and/or B" may represent the following three cases: Only A exists, both A and B exist, and only B exists.

In the following descriptions, the terms "first" and "second" are merely intended for a purpose of description, and shall not be interpreted as indicating or implying relative importance or implying a quantity of indicated technical features. Therefore, a feature defined with "first" or "second" may explicitly or implicitly include one or more features. In the descriptions of embodiments of this application, unless otherwise specified, "a plurality of" means two or more than two.

In embodiments of this application, the word "example" or "for example" is used to represent giving an example, an illustration, or a description. Any embodiment or design scheme described by using "example" or "for example" in embodiments of this application should not be explained as being more preferred or having more advantages than another embodiment or design scheme. Exactly, use of the words such as "example" or "for example" is intended to present a related concept in a specific manner.

The technical solutions in embodiments of this application may be applied to various communication systems, for example, a wireless fidelity (wireless fidelity, Wi-Fi) system, a vehicle to everything (vehicle to everything, V2X) communication system, a device-to-device (device-to-device, D2D) communication system, a vehicle networking communication system, a 4th generation (4th generation, 4G) mobile communication system (for example, a long-term evolved (long term evolution, LTE) system, a worldwide interoperability for microwave access (worldwide interoperability for microwave access, WiMAX) communication system, a 5G communication system (for example, a new radio (new radio, NR) system, and future communication systems (such as the 6th generation (6th generation, 6G) mobile communication system).

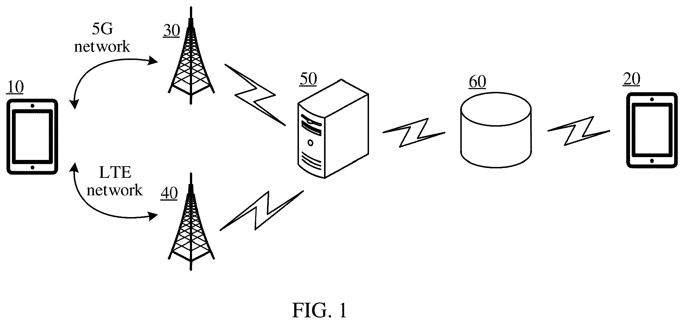

For example, as shown in FIG. 1, a diagram of a structure of a communication system is provided in embodiments of this application. The communication system includes a first terminal 10, a second terminal 20, a first access network device 30, a second access network device 40, a core network device 50, and an internet protocol (internet protocol, IP) multimedia subsystem (IP multimedia subsystem, IMS) device 60.

It should be noted that an IMS is a new form of multimedia service that can meet demands of users for more innovative and diverse multimedia services. The IMS is considered to be the core technology of the next generation communication network and can realize the integration of mobile networks and fixed networks. A session initialization protocol (session initialization protocol, SIP) is used in the IMS, so that voice over internet protocol (voice over internet protocol, VoIP) transmission can be implemented in LTE or NR. The VoIP is referred to as voice over long-term evolved (voice over LTE, VoLTE) in LTE, and referred to as voice over new radio (voice over NR, VoNR) in NR.

The VoLTE refers to that an evolved packet system (evolved packet system, EPS) carries call data during a call process. That the first terminal 10 calls the second terminal 20 through the VoLTE means that the first terminal 10 requests to package control plane signalling (IMS signalling) and user plane data (IMS traffic) involved in a call process between the first terminal 10 and the second terminal 20 into IP packets and transmits them through the EPS and the IMS. In this case, both service data and voice data involved in the first terminal 10 are transmitted in the form of IP packets.

The VoNR refers to that a 5G system (5G system, 5GS) carries call data during a call process. That the first terminal 10 calls the second terminal 20 through the VoNR means that the first terminal 10 packages control plane signalling (IMS signalling) and user plane data (IMS traffic) involved in a call process between the first terminal 10 and the second terminal 20 into IP packets and transmits them through the 5GS and the IMS. In this case, both service data and voice data involved in the first terminal 10 are transmitted in the form of IP packets.

In some embodiments, the first access network device 30 is a network layer of a first communication network, and the second access network device 40 is a network layer of a second communication network. Both the first access network device 30 and the second access network device 40 are devices with wireless receiving and sending functions, or chips (systems) or parts or components that can be integrated into such devices. The first access network device 30 and the second access network device 40 include, but are not limited to, access points (access point, AP) in Wi-Fi systems (such as a home gateway, a router, a server, a switch, a bridge), an evolved NodeB (evolved Node B, eNB), a radio network controller (radio network controller, RNC), a NodeB (Node B, NB), a base station controller (base station controller, BSC), a base transceiver station (base transceiver station, BTS), a home base station (for example, a home evolved NodeB, or a home Node B, HNB), a baseband unit (baseband unit, BBU), a wireless relay node, a wireless backhaul node, a transmission point (transmission and reception point, TRP, or transmission, TP), or the like. They may alternatively be 5G (such as a gNB or a transmission point (TRP or TP) in NR), one or a group of antenna panels (including a plurality of antenna panels) of a base station in a 5G system, or they may alternatively be network nodes (such as a baseband unit BBU, a distributed unit (distributed unit, DU), a road side unit (road side unit, RSU) having a base station function constituting the gNB or a transmission point.

In some embodiments, the first access network device 30 may be a gNB of a 5G network, and the second access network device 40 may be an eNB of an LTE network. On this basis, the first communication network may be the 5G network, and the second communication network may be the LTE network.

Certainly, the first access network device 30 may alternatively be the eNB of the LTE network, and the second access network device 40 may alternatively be the gNB of the 5G network. This is not limited in this embodiment of this application. In subsequent embodiments, for example, the first access network device 30 may be a gNB of a 5G network, and the second access network device 40 may be an eNB of an LTE network.

In this embodiment of this application, the first terminal 10 and the second terminal 20 in the communication system may receive signals from the first communication network or signals from the second communication network at the current location. The first terminal 10 is used as an example. For example, when the current location of the first terminal 10 is a cell corresponding to the first communication network (namely, the 5G network), the first terminal 10 may access the first communication network through the first access network device 30, and communicates with the second terminal 20 (for example, for a voice or data service) through the first communication network. When the first terminal 10 moves from the current location to a cell corresponding to the second communication network (namely, the LTE network), the first terminal 10 may access the second communication network through the second access network device 40, and communicate with the second terminal 20 through the second communication network.

It may be understood that when the first terminal 10 selects to access the first communication network through the first access network device 30, the core network device 50 is a 5G core network. When the first terminal 10 selects to access the second communication network through the second access network device 40, the core network device 50 is an LTE core network.

In some embodiments, the first access device 30, the second access device 40, the core network device 50 and the IMS device 60 can also be collectively referred to as a network (network, NW).

The first terminal 10 may initiate an audio-video call request (or call request) to the second terminal 20. For example, the first terminal 10 that initiates the call request may be referred to as a calling terminal, and the second terminal 20 that receives the call request may be referred to as a called terminal. After the second terminal 20 receives the call request, a call can be made between the first terminal 10 and the second terminal 20, that is, multimedia data such as a voice and a video can be transmitted between the first terminal 10 and the second terminal 20, to provide multimedia services such as the voice and the video for users at the two ends. An international mobile subscriber identification number (international mobile subscriber identification number, IMSI) may be used as an identification between the first terminal 10 and the second terminal 20 during a call and a call process.

It should be noted that in this embodiment of this application, voice solutions involved in the first terminal 10 initiating a call include, but are not limited to: VoNR, VoLTE, a voice solution based on a circuit switched (circuit switched, CS) network domain, VoWi-Fi, or non-3GPP (Non-3GPP inter working function, N3IWF), and the like. In subsequent embodiments, technical solutions of embodiments of this application are described in detail with examples of VoNR and VoLTE. Details are not be repeatedly described here.

The call method provided in embodiments of this application is described below with reference to the communication system in FIG. 1. The call method is applied to a terminal, and the terminal may be a first terminal in the communication system or a second terminal in the communication system.

Usually, the terminal chooses to establish a connection with a communication network with high network signal strength or high signal quality, or establish a connection with more advanced communication networks (such as the LTE network over 3G and 2G networks, and the 5G network over the LTE network). In a communication network (2G, 3G, LTE, or 5G), whether a terminal switches a communication network is determined by a measurement report of the terminal. For example, the terminal may periodically measure signal quality of a serving cell and a neighboring cell through a variety of measurement methods and report a measurement event (or B event) to a network. Then, based on the B event reported by the first terminal, the network indicates the first terminal to switch/redirect to another communication network.

That the terminal switches from the 5G network to the LTE network is used as an example. For example, to ensure continuity of services when the terminal switches from the 5G network to the LTE network, when the terminal establishes a connection with the 5G network, a configuration parameter of an IMS bearer channel required for communication on the 5G network is established, and a configuration parameter of an IMS bearer channel required for communication on the LTE network is mapped. When the terminal switches from the 5G network to the LTE network, or the terminal is in airplane mode/power-on/card plugging/removing scenarios, the network sends a PDU session modification command (PDU session modification command) to the terminal, and the PDU session modification command carries configuration parameters of the IMS bearer channel, where the configuration parameters include the configuration parameter of the IMS bearer channel corresponding to the established 5G network and the configuration parameter of the IMS bearer channel corresponding to the mapped LTE network.

For example, when the configuration parameter of the IMS bearer channel corresponding to the LTE network in the PDU session modification command is abnormal, the configuration parameter of the IMS bearer channel corresponding to the mapped LTE network by default by the terminal is invalid or does not exist. In this case, when the terminal is always connected to the 5G network, the terminal's call is not be affected. When the terminal switches from the 5G network to the LTE network, the configuration parameter of the IMS bearer channel corresponding to the LTE network is invalid or does not exist, resulting in an abnormal call of the terminal.

In some embodiments, after the terminal receives the PDU session modification command sent by the network, if the terminal detects that the configuration parameter of the IMS bearer channel corresponding to the LTE network in the PDU session modification command is abnormal, the terminal sends a PDU session modification request (PDU session modification request) to the network to request to modify the configuration parameter of the IMS bearer channel corresponding to the LTE network. Since the network does not modify the configuration parameter of the IMS bearer channel corresponding to the LTE network, after the terminal switches from the 5G network to the LTE network, the configuration parameter of the IMS bearer channel corresponding to the LTE network is invalid or does not exist, resulting in an abnormal call of the terminal.

It should be noted that, in this embodiment of this application, when the terminal detects that the configuration parameter of the IMS bearer channel corresponding to the 5G network is abnormal, after the terminal sends a PDU session modification request (PDU session modification request) to the network, the network modifies the configuration parameter of the IMS bearer channel corresponding to the 5G network because the terminal currently resides on the 5G network. However, since the terminal currently resides on the 5G network, the network does not modify the configuration parameter of the IMS bearer channel corresponding to the LTE network.

In some embodiments, the terminal may set a timer, and when the timer expires, the terminal determines that the network does not modify the configuration parameter of the IMS bearer channel corresponding to the LTE network. In some other embodiments, when the network does not modify the configuration parameter of the IMS bearer channel corresponding to the LTE network, the network sends a notification message to the terminal to notify the terminal that the network does not modify the configuration parameter of the IMS bearer channel corresponding to the LTE network.

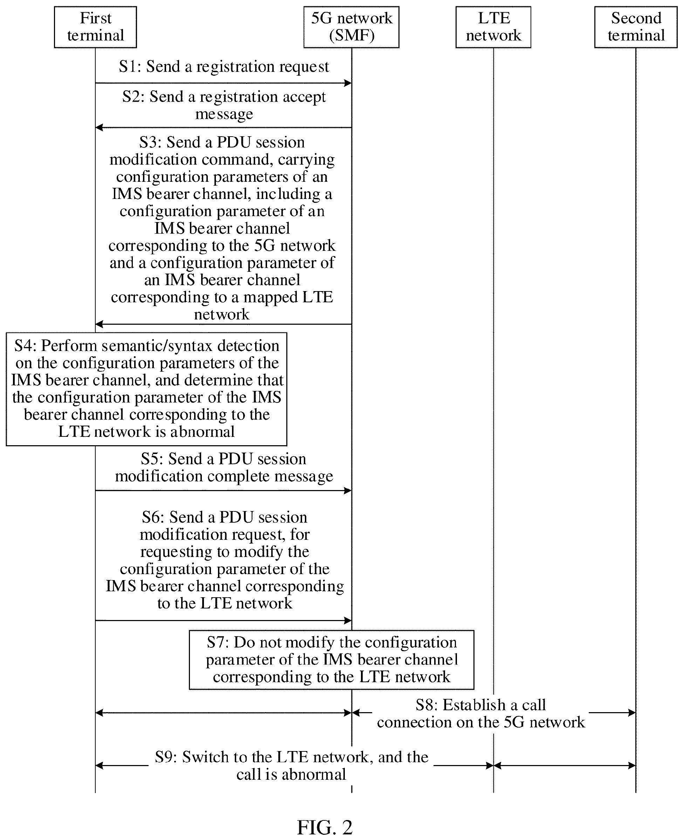

For example, in this embodiment of this application, referring to FIG. 2, the reason why an abnormal call occurs after the terminal switches from the 5G network to the LTE network is illustrated.

S1: A first terminal sends a registration request to a 5G network.

The registration request indicates that the first terminal requests registration on the 5G network, and the registration request may be, for example, a registration request.

In some embodiments, a registration request sent by the first terminal to a network carries a configuration parameter of a bearer channel established by the first terminal. The bearer channel is established between the first terminal and a public data network (public data network, PDN). The bearer channel includes a default bearer channel and a dedicated bearer channel. The default bearer channel includes an internet default bearer channel and an IMS default bearer channel.

Specifically, the internet default bearer channel is used for transmitting data of the first terminal in the process of surfing the internet. The IMS default bearer channel is used for transmitting control signalling in the call and the call process. The dedicated bearer channel is used for transmitting multimedia data (such as voice data or video data) in the call process.

For example, configuration parameters of the bearer channel established by the first terminal may include an access point name (access point name, APN), a data network name (data network name, DNN) data network name, a PDU session ID (PDU session ID, PSI), an EPS bearer identity (EPS bearer identity, EBI), a 5G quality of service (quality of service, QoS) identifier (5G QoS identifier, 5QI), and an LTE QoS class identifier (QoS class identifier, QCI).

Herein, the PSI represents a PDU session ID of the 5G network, the EBI represents an EPS ID of the LTE network, the 5QI represents a quality level of the 5G network, and the QCI represents a quality level of the LTE network.

It should be noted that the above are only some examples of the configuration parameters of the bearer channel, and do not constitute a limitation of this application.

In addition, in embodiments of this application, "mapping" refers to a one-to-one correspondence relationship, that is, the configuration parameters of the IMS bearer channel corresponding to the 5G network correspond to the configuration parameters of the IMS bearer channel corresponding to the LTE network. For example, the PSI corresponds to the EBI, and the 5QI corresponds to the QCI.

S2: The 5G network sends a registration accept message to the first terminal.

The registration accept message indicates the 5G network to accept a request for the first terminal to register on the 5G network. For example, the registration accept message may be registration accept.

S3: The 5G network sends a PDU session modification command to the first terminal, carrying configuration parameters of an IMS bearer channel, including a configuration parameter of an IMS bearer channel corresponding to the 5G network and a configuration parameter of an IMS bearer channel corresponding to the mapped LTE network.

For example, the PDU session modification command may be, a PDU session modification command.

S4: Perform semantic/syntax detection on the configuration parameters of the IMS bearer channel, and determine that the configuration parameter of the IMS bearer channel corresponding to the LTE network is abnormal.

It may be understood that if the configuration parameter of the IMS bearer channel corresponding to the LTE network determined by the first terminal is abnormal, the configuration parameter of the IMS bearer channel corresponding to the LTE network by default by the first terminal is invalid or does not exist.

S5: The first terminal sends a PDU session modification complete message to the 5G network.

For example, the PDU session modification complete message may be, a PDU session modification complete.

S6: The first terminal sends a PDU session modification request to the 5G network for requesting to modify the configuration parameter of the IMS bearer channel corresponding to the LTE network.

For example, the PDU session modification request may be, for example, a PDU session modification request, where the PDU session modification request carries a reason value # 85 "invalid mapped EPS bearer identity" (that is, the mapped EPS bearer identity is invalid).

S7: The 5G network does not modify the configuration parameter of the IMS bearer channel corresponding to the LTE network.

S8: The first terminal and the second terminal establish a call connection on the 5G network.

S9: After the first terminal switches to the LTE network, the call is abnormal.

In this embodiment of this application, after the 5G network receives the PDU session modification request sent by the first terminal, since the network does not modify the configuration parameter of the IMS bearer channel corresponding to the LTE network, after the first terminal switches from the 5G network to the LTE network, the configuration parameter of the IMS bearer channel corresponding to the LTE network is invalid or does not exist by default by the first terminal, resulting in an abnormal call.

Refer to FIG. 2. In this embodiment of this application, if the first terminal determines that the IMS bearer channel corresponding to the LTE network is invalid or does not exist, the first terminal sends a PDU session modification request to the 5G network and carries the reason value # 85 "invalid mapped EPS bearer identity". For example, in this embodiment of this application, when the following three cases exist, the terminal sends a "PDU session modification request, # 85" invalid mapped EPS bearer identity "to the network.

Case 1: Due to a network failure, a configuration parameter of a bearer channel sent by the network to the terminal does not conform to the specification; or a configuration parameter of a bearer channel lack a necessary element. For example, the configuration parameter of the bearer channel does not include a protocol configuration option (protocol configuration options, PCO) or an extended protocol configuration option (extended protocol configuration options, ePCO).

Case 2: Among the configuration parameters of the bearer channel sent by the network to the terminal, due to a network failure, a mapping relationship between the bearer channel corresponding to the 5G network and the bearer channel corresponding to the LTE network is incorrect; or the bearer channel corresponding to the LTE network is incorrect.

Case 3: Due to the terminal, a detection error occurs when the terminal performs semantic/syntax detection on the configuration parameter of the bearer channel sent by the network.

If any of the above three cases exist, the terminal determines that the bearer channel corresponding to the LTE network is invalid or does not exist, and sends a "PDU session modification request, # 85" invalid mapped EPS bearer identity "to the network. Since the network receives the "PDU session modification request, # 85" invalid mapped EPS bearer identity "sent by the terminal, the network does not modify the configuration parameter of the bearer channel corresponding to the LTE network, and therefore, when the terminal switches from the 5G network to the LTE network, the bearer channel corresponding to the LTE network is invalid or does not exist, resulting in network abnormality.

In some embodiments, the network refuses to modify the configuration parameter of the bearer channel corresponding to the LTE network after receiving the "PDU session modification request, #85 "invalid mapped EPS bearer identity" sent by the terminal. In some other embodiments, after receiving the "PDU session modification request, # 85 "invalid mapped EPS bearer identity "sent by the terminal, the network does not respond to the" PDU session modification request, # 85 "invalid mapped EPS bearer identity".

It should be noted that, the configuration parameter of the bearer channel may be understood as a configuration parameter of an internet default bearer channel, a configuration parameter of an IMS default bearer channel, and a configuration parameter of an IMS dedicated bearer channel.

Refer to FIG. 2. A scenario in which a call between the first terminal and the second terminal is abnormal is described below, taking the first terminal switching from the 5G network to the LTE network as an example.

Scenario 1: The configuration parameter of the internet default bearer channel corresponding to the LTE network is invalid or does not exist, and the configuration parameter of the IMS default bearer channel corresponding to the LTE network is invalid or does not exist.

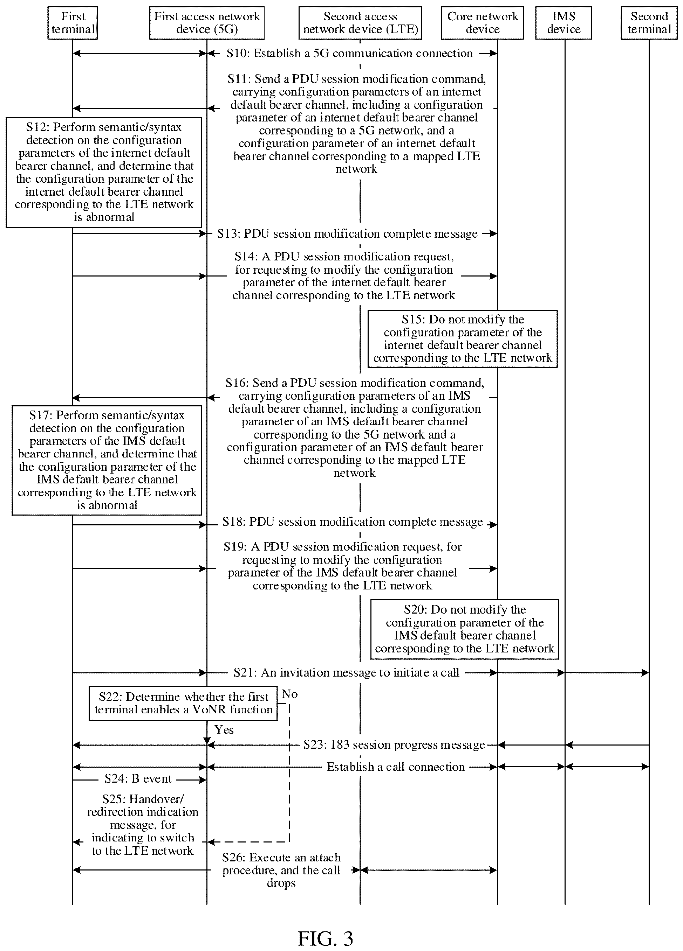

For example, the scenario 1 is illustrated with reference to FIG. 3 in this embodiment of this application.

S 10: A first terminal establishes a 5G communication connection with a core network device through a first access network device.

For example, the first terminal may establish a communication connection with the core network device through a registration (registration) procedure. For an example of the registration procedure, refer to the above embodiment, which is not be described in detail here.

S11: The core network device sends a PDU session modification command to the first terminal through the first access network device, carrying configuration parameters of an internet default bearer channel, including a configuration parameter of an internet default bearer channel corresponding to a 5G network, and a configuration parameter of an internet default bearer channel corresponding to a mapped LTE network.

For example, the PDU session modification command may be represented as, a PDU session modification command, PSI#1 map EBI#5.

S12: The first terminal performs semantic/syntax detection on the configuration parameters of the internet default bearer channel, and determines that the configuration parameter of the internet default bearer channel corresponding to the LTE network is abnormal.

It may be understood that if the configuration parameter of the internet default bearer channel corresponding to the LTE network is abnormal, the configuration parameter of the internet default bearer channel corresponding to the LTE network determined by the first terminal is invalid or does not exist.

S13: The first terminal sends a PDU session modification complete message to the core network device through the first access network device.

For example, the PDU session modification complete message may be, a PDU session modification complete.

S14: The first terminal sends a PDU session modification request to the core network device through the first access network device for requesting to modify the configuration parameter of the internet default bearer channel corresponding to the LTE network.

For example, the PDU session modification request may be, for example, a PDU session modification request, where the PDU session modification request carries a reason value # 85 "invalid mapped EPS bearer identity".

S15: The core network device does not modify the configuration parameter of the internet default bearer channel corresponding to the LTE network.

It may be understood that since the core network device does not modify the configuration parameter of the internet default bearer channel corresponding to the LTE network, when the first terminal switches from the 5G network to the LTE network, because an internet default bearer channel corresponding to the LTE network between the first terminal and the PDN should be re-established, abnormal phenomena such as network stuck and delay of the first terminal may occur. For example, the first terminal gets stuck on the internet for a few seconds.

S16: The core network device sends a PDU session modification command to the first terminal through the first access network device, carrying configuration parameters of an IMS default bearer channel, including a configuration parameter of an IMS default bearer channel corresponding to the 5G network, and a configuration parameter of an IMS default bearer channel corresponding to the mapped LTE network.

For example, the PDU session modification command may be represented as, a PDU session modification command, PSI#2 map EBI#6.

S17: The first terminal performs semantic/syntax detection on the configuration parameters of the IMS default bearer channel, and determines that the configuration parameter of the IMS default bearer channel corresponding to the LTE network is abnormal.

It may be understood that if the configuration parameter of the IMS default bearer channel corresponding to the LTE network is abnormal, the terminal determines that the configuration parameter of the IMS default bearer channel corresponding to the LTE network is invalid or does not exist.

S18: The first terminal sends a PDU session modification complete message to the core network device through the first access network device.

For example, the PDU session modification complete message may be, a PDU session modification complete.

S19: The first terminal sends a PDU session modification request to the core network device through the first access network device for requesting to modify the configuration parameter of the IMS default bearer channel corresponding to the LTE network.

For example, the PDU session modification request may be, for example, a PDU session modification request, where the PDU session modification request carries a reason value # 85 "invalid mapped EPS bearer identity".

S20: The core network device does not modify the configuration parameter of the IMS default bearer channel corresponding to the LTE network.

It may be understood that since the core network device does not modify the configuration parameter of the IMS default bearer channel corresponding to the LTE network, during a call between the first terminal and the second terminal, after the first terminal switches from the 5G network to the LTE network, the configuration parameter of the IMS bearer channel corresponding to the LTE network is invalid or does not exist, resulting in an abnormal call between the first terminal and the second terminal, such as the call drops. That the call drops refers to abnormal termination of the call between the first terminal and the second terminal during the call process.

S21: The first terminal sends an invitation message to the second terminal through a network to initiate a call.

The invitation message indicates the first terminal to request a call to the second terminal. For example, the invitation message may be an invite message.

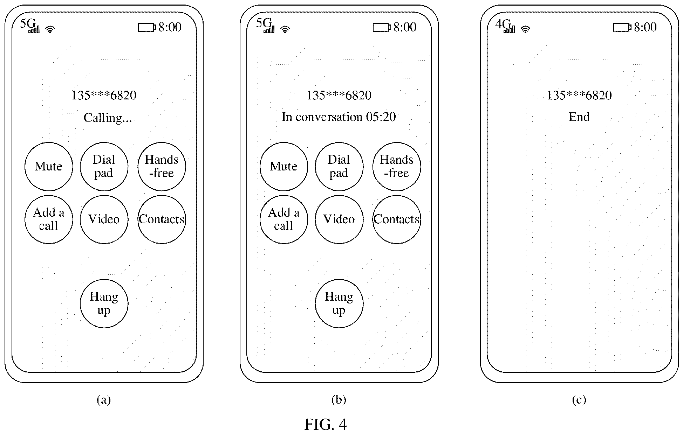

In some embodiments, an application for talking may be installed on the first terminal. For example, a "telephone application" is installed on the first terminal. On this basis, the first terminal may make a voice or video call to call the second terminal in response to an operation of a user selecting a telephone number of a contact corresponding to the second terminal in the "telephone application". For example, (a) in FIG. 4 is a diagram of a call interface for the first terminal to call the second terminal. With reference to (a) in FIG. 4, when the first terminal calls the second terminal, the first terminal may send an invitation message to the second terminal through the network. For example, as shown in FIG. 3, the first terminal sends the invitation message to the second terminal through the first access network device, the core network device, and the IMS device.

For example, after the second terminal receives the invitation message sent by the first terminal, the second terminal sends a 100 trying message to the first terminal. The 100 trying message indicates that the second terminal has received the invitation message from the first terminal. For example, the 100 trying message may be 100 trying.

S22: The first access network device determines whether the first terminal enables a VoNR function.

In some embodiments, in the process of calling the second terminal by the first terminal, the first access network device determines whether the first terminal enables the VoNR function. For example, if the first terminal does not enable the VoNR function, the first access network device indicates the first terminal to switch to the LTE network, that is, S25 is performed. After the first terminal switches from the 5G network to the LTE network, the configuration parameter of the IMS default bearer channel corresponding to the LTE network is invalid or does not exist, resulting in the first terminal failing to call. The call failure means that the first terminal does not successfully make a call to the second terminal.

For another example, if the first terminal enables the VoNR function, the first terminal can continue to call the second terminal, that is, S23 is still performed.

S23: The second terminal sends a 183 session progress message to the first terminal through the network.

The 183 session progress message indicates progress information for establishing a session. For example, the 183 session progress message may be 183 session progress.

During the call process between the first terminal and the second terminal, the first terminal may periodically measure signal quality of a surrounding cell by using various measurement techniques. If the first terminal detects that signal quality of the LTE network is higher than signal quality of the 5G network, the first terminal sends a measurement event (such as B event) to the first access network device.

S24: The first terminal sends the B event to the first access network device.

The B event indicates that the signal quality of the LTE network is higher than that of the 5G network.

S25: The first access network device sends a handover/redirection indication message to the first terminal, for indicating the first terminal to switch/redirect to the LTE network.

For example, the handover/redirection indication message may be, for example, radio resource control (radio resource control, RRC) connection release. Alternatively, the handover/redirection indication message may be a redirection redirection message. This is not limited in embodiments of this application.

S26: The first terminal executes an attach procedure, and the call drops.

As shown in FIG. 3, when the first terminal receives the handover/redirection indication message sent by the first access network device, the first terminal switches to the LTE network. Therefore, during the call process between the first terminal and the second terminal, after the first terminal switches to the LTE network, the configuration parameter of the IMS default bearer channel corresponding to the LTE network is invalid or does not exist, resulting in that the call between the first terminal and the second terminal drops.

In addition, in scenario 1, because the internet default bearer channel corresponding to the LTE network is invalid or does not exist, and the IMS default bearer channel corresponding to the LTE network is invalid or does not exist, the first terminal re-executes the attach procedure after switching to the LTE network. The attach procedure indicates a registration procedure when the first terminal reconnects to the LTE network. For examples of the attach procedure, refer to the relevant technologies, which are be repeated herein.

For example, as shown in (b) in FIG. 4, during a call between the first terminal and the second terminal, when the first terminal switches to the LTE network, as shown in (c) in FIG. 4, a network identifier of the first terminal changes from 5G to 4G, and the call between the first terminal and the second terminal ends.

Scenario 2: The configuration parameter of the IMS default bearer channel of the LTE network is invalid or does not exist.

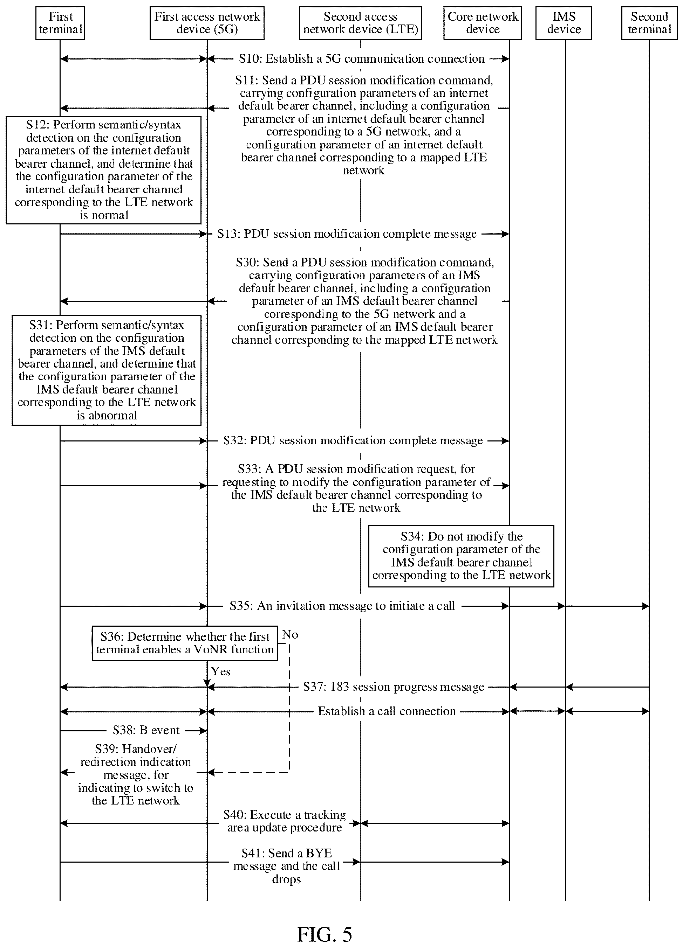

For example, the scenario 2 is illustrated with reference to FIG. 5 in this embodiment of this application.

It should be noted that the difference between scenario 2 and scenario 1 is that in the PDU session modification command sent by the core network device to the first terminal in scenario 2, the configuration parameter of the internet default bearer channel corresponding to the LTE network is normal. To be specific, the first terminal performs semantic/syntax detection on the configuration parameter of the internet default bearer channel, and determines that the configuration parameter of the internet default bearer channel corresponding to the LTE network is normal, that is, the configuration parameter of the internet default bearer channel corresponding to the LTE network exists and is valid.

It may be understood that with reference to the scenario 1 and FIG. 3, in the scenario 2, in this embodiment of this application, S10 to S13 may be performed to determine that the configuration parameter of the internet default bearer channel corresponding to the LTE network is normal, that is, the internet default bearer channel corresponding to the LTE network exists and is valid. For a specific implementation, refer to the foregoing embodiment. This is not described herein again.

S30: The core network device sends the PDU session modification command to the first terminal through the first access network device, carrying configuration parameters of the IMS default bearer channel, including a configuration parameter of the IMS default bearer channel corresponding to the 5G network, and a configuration parameter of the IMS default bearer channel corresponding to the mapped LTE network.

S31: The first terminal performs semantic/syntax detection on the configuration parameters of the IMS default bearer channel, and determines that the configuration parameter of the IMS default bearer channel corresponding to the LTE network is abnormal.

S32: The first terminal sends the PDU session modification complete message to the core network device through the first access network device.

S33: The first terminal sends the PDU session modification request to the core network device through the first access network device for requesting to modify the configuration parameter of the IMS default bearer channel corresponding to the LTE network.

S34: The core network device does not modify the configuration parameter of the IMS default bearer channel corresponding to the LTE network.

S35: The first terminal sends an invitation message to the second terminal through the network to initiate a call.

S36: The first access network device determines whether the first terminal enables a VoNR function.

S37: The second terminal sends a 183 session progress message to the first terminal through the network.

S38: The first terminal sends the B event to the first access network device.

The B event indicates that the signal quality of the LTE network is higher than that of the 5G network.

S39: The first access network device sends a handover/redirection indication message to the first terminal, for indicating the first terminal to switch/redirect to the LTE network.

It should be noted that for the above examples of the specific implementations of S30 to S39, refer to the examples of the specific implementations of S16 to S26 in scenario 1 above. Details are not described herein again.

S40: The first terminal executes a tracking area update procedure.

As shown in FIG. 5, when the first terminal receives the handover/redirection indication message sent by the first access network device, the first terminal can switch to the LTE network through the tracking area update (tracking area update, TAU) procedure. Therefore, during the call process between the first terminal and the second terminal, after the first terminal switches to the LTE network, the configuration parameter of the IMS default bearer channel corresponding to the LTE network is invalid or does not exist, resulting in that the call between the first terminal and the second terminal drops.

S41: The first terminal sends a BYE message to the core network device through the second access network device, and the call drops.

For example, as shown in FIG. 5, the first terminal sends a call BYE message to the core network device through the second access network device. The BYE message carries a reason value "cancel with media beare loss", and the BYE message indicates that the call between the first terminal and the second terminal is abnormal. Then, after receiving the BYE message, the core network device ends the call between the first terminal and the second terminal, that is, the call between the first terminal and the second terminal drops.

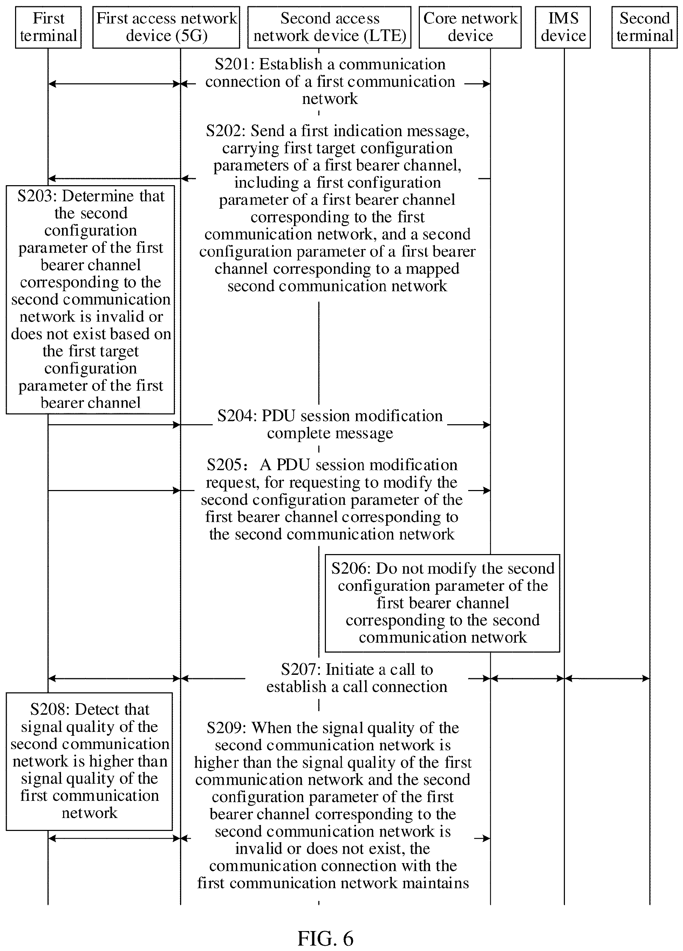

Embodiments of this application provide a call method that can solve the problem of dropped calls in the above scenarios 1 and 2. An example in which the above-described terminal is a first terminal and the first terminal switches from the 5G network to the LTE network is used to illustrate a call method in this embodiment of this application. For example, as shown in FIG. 6, the call method may include the following steps.

S201: A first terminal establishes a communication connection of a first communication network to a core network device through a first access network device.

For example, in S201, the first access network device and the core network device can be referred to as first network devices. That is, the first terminal can establish a 5G communication connection with the first network device through the first communication network (namely, a 5G network).

S202: The core network device sends a first indication message to the first terminal through the first access network device, carrying first target configuration parameters of a first bearer channel, including a first configuration parameter of a first bearer channel corresponding to a first communication network, and a second configuration parameter of a first bearer channel corresponding to a mapped second communication network.

For example, the first indication message may be a PDU session modification command in the scenario 1 and scenario 2, the first bearer channel may be, for example, the IMS default bearer channel, and the first target configuration parameter of the first bearer channel may be, for example, a configuration parameter of the IMS default bearer channel carried in the PDU session modification command. Correspondingly, the first configuration parameter of the first bearer channel corresponding to the first communication network may be the configuration parameter (such as PSI) of the IMS default bearer channel corresponding to the 5G network. The second configuration parameter of the first bearer channel corresponding to the second communication network (such as, EBI) may be the configuration parameter of the IMS default bearer channel corresponding to the LTE network.

S203: The first terminal determines that the second configuration parameter of the first bearer channel corresponding to the second communication network is invalid or does not exist based on the first target configuration parameter of the first bearer channel.

For example, the first terminal performs semantic/syntax detection on the first target configuration parameter of the first bearer channel. If the second configuration parameter of the first bearer channel corresponding to the second communication network is abnormal, the first terminal determines that the second configuration parameter of the first bearer channel corresponding to the second communication network is invalid or does not exist.

S204: The first terminal sends a PDU session modification complete message to the core network device through the first access network device.

S205: The first terminal sends a PDU session modification request to the core network device through the first access network device for requesting to modify the second configuration parameter of the first bearer channel corresponding to the second communication network.

S206: The core network device does not modify the second configuration parameter of the first bearer channel corresponding to the second communication network.

It should be noted that for the examples of S204 and S205, refer to the examples of S18 to S20 in scenario 1. Details are not described herein again.

S207: The first terminal initiates a call to a second terminal to establish a call connection.

For example, the first terminal may send an invitation message to the second terminal to invite the second terminal to make a call. Then, the second terminal sends a 100 trying message and a 183 session progress message to the first terminal. After the second terminal accepts the invitation message of the first terminal, the first terminal establishes a call connection with the second terminal.

In some embodiments, the first terminal may use the first configuration parameter of the first bearer channel corresponding to the first communication network to establish a call connection with the second terminal.

S208: The first terminal detects that signal quality of the second communication network is higher than signal quality of the first communication network.

For example, the first terminal may periodically detect communication quality of a communication network of a surrounding serving cell by using a plurality of measurement methods.

S209: When the signal quality of the second communication network is higher than the signal quality of the first communication network and the second configuration parameter of the first bearer channel corresponding to the second communication network is invalid or does not exist, the communication connection with the first communication network maintains.

In some embodiments, when configuration parameters of the first bearer channel include the first configuration parameter of the first bearer channel corresponding to the first communication network and the second configuration parameter of the first bearer channel corresponding to the mapped second communication network, the first terminal determines that the second configuration parameter of the first bearer channel corresponding to the second communication network is invalid.

In some other embodiments, when configuration parameters of the first bearer channel include the first configuration parameter of the first bearer channel corresponding to the first communication network and do not include the second configuration parameter of the first bearer channel corresponding to the second communication network, the first terminal determines that the second configuration parameter of the first bearer channel corresponding to the second communication network does not exist.

In a related technology, if the first terminal detects that the signal quality of the LTE network is higher than that of the 5G network, the first terminal switches to the LTE network. During the call process between the first terminal and the second terminal, after the first terminal switches to the LTE network, the configuration parameter of the IMS default bearer channel corresponding to the LTE network is invalid or does not exist, resulting in that the call between the first terminal and the second terminal drops.

In conclusion, in the solutions in embodiments of this application, during the call process between the first terminal and the second terminal, when signal quality of a second communication network is higher than signal quality of a first communication network and a second configuration parameter of a first bearer channel corresponding to the second communication network is invalid or does not exist, the first terminal maintains a connection with the first communication network through a first network device, to prevent from switching to the second communication network to prevent the call from dropping between the first terminal and the second terminal.

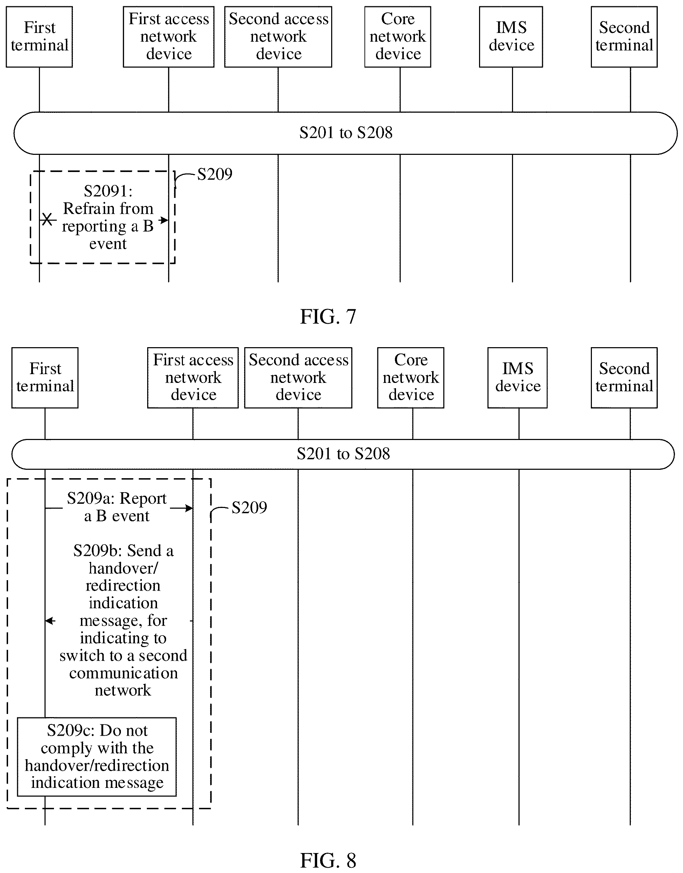

In some embodiments of this application, as shown in FIG. 7, the first terminal maintains the communication connection with the first communication network through the first network device, including the following steps.

S2091: The first terminal refrains from reporting a B event to the first access network device.

The B event indicates that the signal quality of the second communication network is higher than the signal quality of the first communication network.

It may be understood that, in the related technology, when the first terminal reports (report) the B event to the first access network device, the first access network device sends a handover/redirection indication message to the first terminal to indicate that the first terminal switches/redirects to the second communication network.

In this embodiment, since the first terminal refrains from reporting the B event to the first access network device, that is, the first terminal does not inform the first access network device that the signal quality of the second communication network is higher than the signal quality of the first communication network, the first access network device does not send a handover/redirection indication message to the first terminal, thereby preventing the first terminal from handover/redirection to the second communication network and preventing the first terminal from dropping a call with the second terminal.

In some embodiments of this application, as shown in FIG. 8, the first terminal maintains the communication connection with the first communication network through the first network device, including the following steps.

S209a: The first terminal reports a B event to the first access network device.

S209b: The first access network device sends a handover/redirection indication message to the first terminal, for indicating to switch to a second communication network.

S209c: The first terminal does not comply with the handover/redirection indication message sent by the first access network device.

For example, that the first terminal does not conform to the handover/redirection indication message sent by the first access network device means that the first terminal does not respond to the handover/redirection indication message sent by the first access network device; or the first terminal responds to the handover/redirection indication message sent by the first access network device, but the first terminal does not handover/redirect to the second communication network, that is, the first terminal ignores the handover/redirection indication message sent by the first access network device.

In this way, after the first terminal receives the handover/redirection indication message sent by the first access network device, the first terminal does not comply with the handover/redirection indication message sent by the first access network device, thereby preventing the first terminal from handover/redirection to the second communication network and preventing the first terminal from dropping a call with the second terminal.

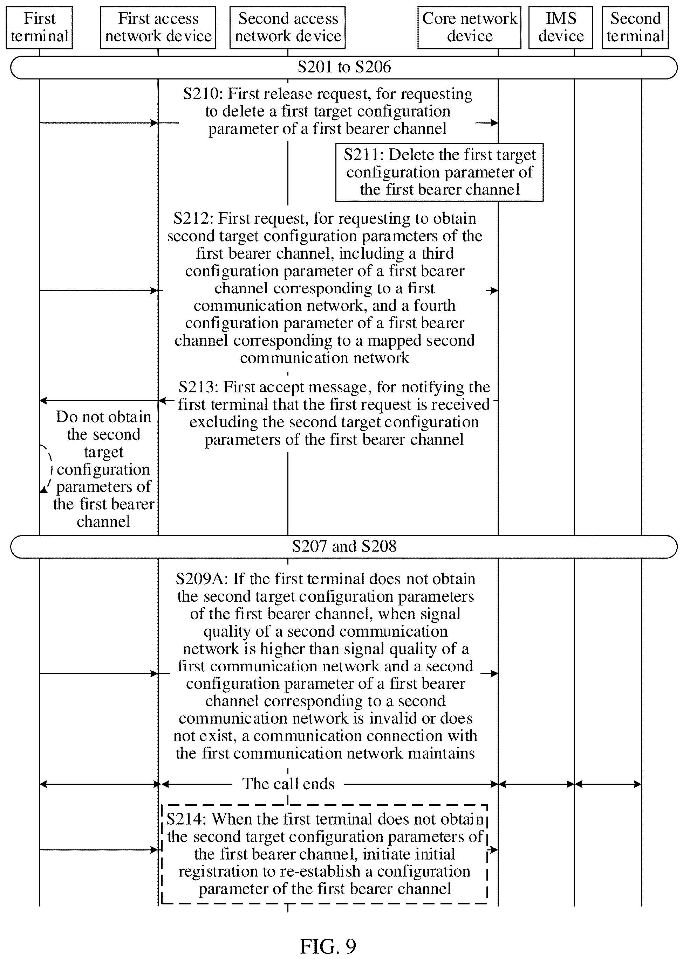

In some embodiments, as shown in FIG. 9, before the first terminal calls the second terminal for a call, the call method may also include the following steps.

S210: The first terminal sends a first release request to the core network device through the first access network device, for requesting the core network device to delete a first target configuration parameter of a first bearer channel.

For example, after receiving the first release request, the core network device may override the first target configuration parameter of the first bearer channel with the second target configuration parameter of the first bearer channel.

S211: The core network device deletes the first target configuration parameter of the first bearer channel.

S212: The first terminal sends a first request to the core network device through the first access network device, for requesting to obtain second target configuration parameters of the first bearer channel, including a third configuration parameter of a first bearer channel corresponding to the first communication network, and a fourth configuration parameter of a first bearer channel corresponding to a mapped second communication network.

S213: The core network device sends a first accept message to the first terminal, for notifying the first terminal that the first request is received excluding the second target configuration parameters of the first bearer channel.

For example, after the first terminal receives the first accept message, the first terminal deletes the first target configuration parameter of the first bearer channel. Alternatively, after the first terminal receives the first accept message, the first terminal overrides the first target configuration parameter of the first bearer channel with the second target configuration parameter of the first bearer channel.

It may be understood that, in S213, the core network device sends the first accept message to the first terminal, that is, informs the first terminal that the first request is received, but does not configure the second target configuration parameter of the first bearer channel to the first terminal. Therefore, in this case, the first terminal does not obtain the second target configuration parameter of the first bearer channel.

In some embodiments, that the first terminal does not obtain a third configuration parameter of the first bearer channel may include: The first terminal refrains from sending the first request to the core network device; or the first terminal sends the first request to the core network device, but the first terminal does not receive the first accept message sent by the core network device. For example, the first terminal sends the first request to the core network device, but does not receive the first acceptance request sent by the core network device within a preset time period. Alternatively, the first terminal sends the first request to the core network device, but does not receive the first acceptance request sent by the core network device before the first terminal initiates a call to the second terminal.

For example, as shown in FIG. 9, when the first terminal does not obtain the second target configuration parameter of the first bearer channel, the first terminal may continue to perform S207 and S208. For a specific implementation, refer to the foregoing embodiment. This is not described herein again.

S209A: If the first terminal does not obtain the second target configuration parameters of the first bearer channel, when signal quality of the second communication network is higher than signal quality of the first communication network and a second configuration parameter of a first bearer channel corresponding to the second communication network is invalid or does not exist, the first terminal maintains a connection with the first communication network through the first network device.

In this embodiment of this application, before the first terminal talks with the second terminal, the first terminal may attempt to re-obtain the configuration parameter of the first bearer channel from the core network device, that is, re-obtain the second target configuration parameter of the first bearer channel. If the first terminal does not obtain the second target configuration parameter of the first bearer channel, during the call process between the first terminal and the second terminal, when signal quality of the second communication network is higher than signal quality of the first communication network and a second configuration parameter of a first bearer channel corresponding to the second communication network is invalid or does not exist, the first terminal maintains a connection with the first communication network through the first network device, to avoid switching to the second communication network to prevent the first terminal from dropping the call with the second terminal.

S214: When the first terminal does not obtain the second target configuration parameters of the first bearer channel, the first terminal may initiate initial registration with the core network device to re-establish the configuration parameter of the first bearer channel.

For example, the first terminal may initiate an initial registration with the core network device in a non-service state (like an airplane mode). Alternatively, the first terminal initiates initial registration to the core network device in an off-screen state.

In this way, it is possible to ensure that a next call between the first terminal and the second terminal is normal with a high probability.

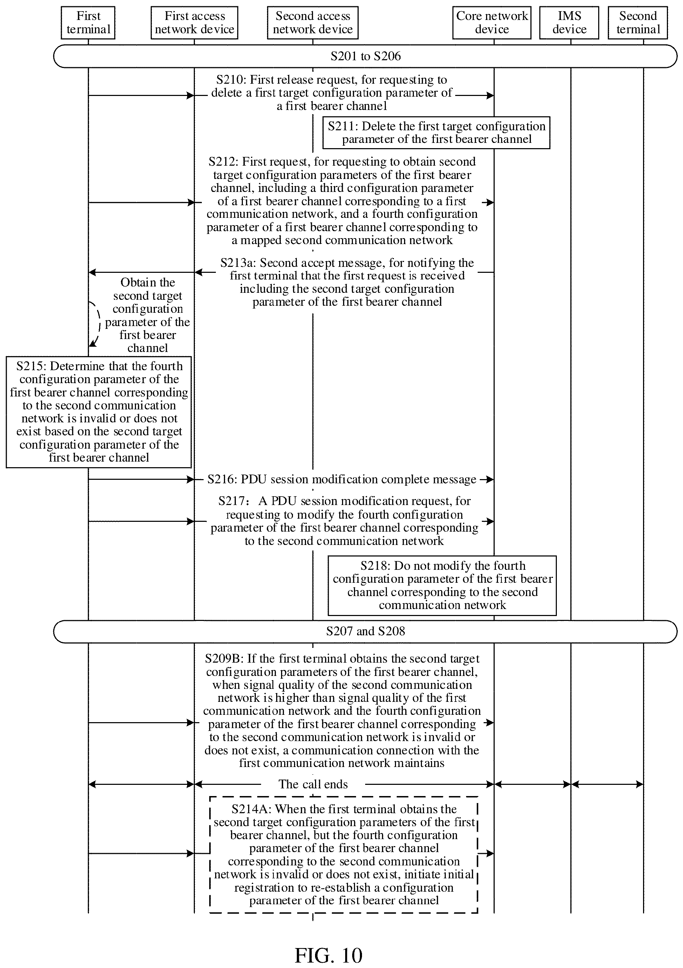

In some embodiments of this application, as shown in FIG. 10, before the first terminal calls the second terminal for a call, the call method may also include the following steps.

S210: The first terminal sends a first release request to the core network device through the first access network device, for requesting the core network device to delete a first target configuration parameter of a first bearer channel.

S211: The core network device deletes the first target configuration parameter of the first bearer channel.

S212: The first terminal sends a first request to the core network device through the first access network device, for requesting to obtain second target configuration parameters of the first bearer channel, including a third configuration parameter of a first bearer channel corresponding to a first communication network, and a fourth configuration parameter of a first bearer channel corresponding to a mapped second communication network.

S213a: The core network device sends a second accept message to the first terminal, for notifying the first terminal that the first request is received including the second target configuration parameter of the first bearer channel.

It may be understood that, in S213a, the core network device sends the second accept message to the first terminal, that is, informs the first terminal that the first request is received, and configures the second target configuration parameter of the first bearer channel to the first terminal. Therefore, in this case, the first terminal obtains the second target configuration parameter of the first bearer channel.

S215: The first terminal determines that a fourth configuration parameter of the first bearer channel corresponding to the second communication network is invalid or does not exist based on the second target configuration parameter of the first bearer channel.

S216: The first terminal sends a PDU session modification complete message to the core network device.

S217: The first terminal sends a PDU session modification request to the core network device for requesting to modify the fourth configuration parameter of the first bearer channel corresponding to the second communication network.

S218: The core network device does not modify the fourth configuration parameter of the first bearer channel corresponding to the second communication network.

For example, as shown in FIG. 10, if the first terminal obtains the second target configuration parameter of the first bearer channel, but the fourth configuration parameter of the first bearer channel corresponding to the second communication network is invalid or does not exist, the first terminal can continue to perform S207 and S208. For a specific implementation, refer to the foregoing embodiment. This is not described herein again.

S209B: If the first terminal obtains the second target configuration parameter of the first bearer channel, when signal quality of the second communication network is higher than signal quality of the first communication network and a fourth configuration parameter of a first bearer channel corresponding to the second communication network is invalid or does not exist, the first terminal maintains a connection with the first communication network through the first network device.

In this embodiment of this application, before the first terminal talks with the second terminal, the first terminal may attempt to re-obtain the configuration parameter of the first bearer channel from the core network device, that is, re-obtain the second target configuration parameter of the first bearer channel. If the first terminal obtains the second target configuration parameter of the first bearer channel, during the call process between the first terminal and the second terminal, when signal quality of the second communication network is higher than signal quality of the first communication network and a fourth configuration parameter of a first bearer channel corresponding to the second communication network is invalid or does not exist, the first terminal maintains a connection with the first communication network through the first network device, to avoid switching to the second communication network to prevent the first terminal from dropping the call with the second terminal.

S214A: When the first terminal obtains the second target configuration parameter of the first bearer channel, but the fourth configuration parameter of the first bearer channel corresponding to the second communication network is invalid or does not exist, the first terminal may initiate initial registration with the core network device to re-establish the configuration parameter of the first bearer channel.

In this way, it is possible to ensure that a next call between the first terminal and the second terminal is normal with a high probability.

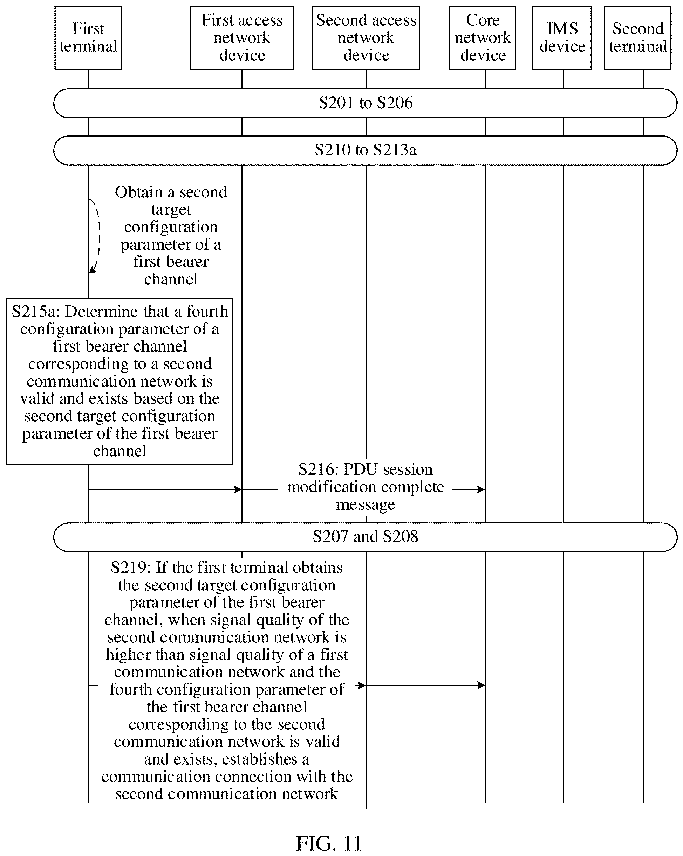

In some embodiments of this application, with reference to FIG. 10, as shown in FIG. 11, the call method may also include the following steps. It should be noted that, in the embodiment shown in FIG. 11, the first terminal determines that the second configuration parameter of the first bearer channel corresponding to the second communication network is invalid or does not exist by performing steps S201 to S206. In addition, the first terminal obtains the second target configuration parameter of the first bearer channel from the core network device by performing the steps from S210 to S213a.

S215a: The first terminal determines that a fourth configuration parameter of a first bearer channel corresponding to a second communication network is valid and exists based on the second target configuration parameter of the first bearer channel.

It may be understood that in S215a, after the first terminal performs semantic/syntax detection on the second target configuration parameter of the first bearer channel, it is determined that the fourth configuration parameter of the first bearer channel corresponding to the second communication network is normal.

S216: The first terminal sends a PDU session modification complete message to the core network device through the first access network device.

For example, as shown in FIG. 11, when the first terminal obtains the second target configuration parameter of the first bearer channel, the first terminal may continue to perform S207 and S208. For a specific implementation, refer to the foregoing embodiment. This is not described herein again.

S219: If the first terminal obtains the second target configuration parameter of the first bearer channel, when signal quality of the second communication network is higher than signal quality of a first communication network and the fourth configuration parameter of the first bearer channel corresponding to the second communication network is valid and exists, establishes a communication connection with the second communication network.

In this way, in this embodiment, since the first terminal obtains the second target configuration parameter of the first bearer channel, and after performing voice/syntax detection on the second target configuration parameter of the first bearer channel, determines that the fourth configuration parameter of the first bearer channel corresponding to the second communication network is normal, that is, the fourth configuration parameter of the first bearer channel corresponding to the second communication network exists and is valid, the first terminal may establish a communication connection with the second communication network through the second network device when signal quality of the second communication network is higher than signal quality of the first communication network. In this way, even if the first terminal switches/redirects to the second communication network during the call, it is possible to ensure that the call is normal.

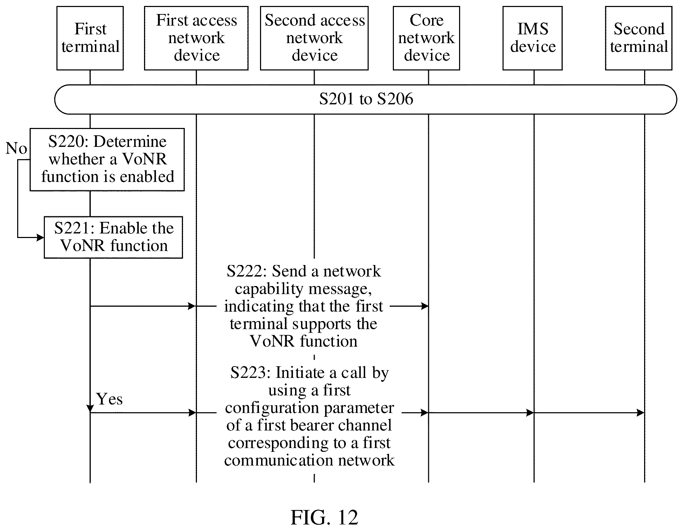

In some embodiments, as shown in FIG. 12, before the first terminal calls the second terminal, the call method may also include the following steps. It should be noted that, in the embodiment shown in FIG. 12, the first terminal determines that the second configuration parameter of the first bearer channel corresponding to the second communication network is invalid or does not exist by performing steps S201 to S206.

S220: The first terminal determines whether a VoNR function is enabled.

In some embodiments, if the first terminal does not enable the VoNR function, the first terminal continues to perform S221. If the first terminal enables the VoNR function, the first terminal continues to perform S223.

S221: The first terminal enables the VoNR function.

S222: The first terminal sends a network capability message to the core network device through the first access network device, indicating that the first terminal supports the VoNR function.

S223: The first terminal initiates a call to the second terminal by using a first configuration parameter of a first bearer channel corresponding to a first communication network.

In some embodiments, if the first communication network is a 5G network, after the first terminal enables the VoNR function, when the first terminal executes a TAU procedure, the first terminal may trigger the core network device to inquire about a capability of the first terminal (that is, trigger the core network device to inquire whether the first terminal supports the VoNR function). Then, the core network device sends a query capability message to the first terminal, indicating whether the first terminal supports the VoNR function.

After the first terminal receives the query capability message sent by the core network device, the first terminal sends the network capability message to the core network device through the first access network device in response to the query capability message.

In the related technology, if the first terminal does not enable the VoNR function, the first terminal switches to the LTE network and initiates a call to the second terminal by using a VoLTE technology. After the first terminal switches to the LTE network, a configuration parameter of a bearer channel corresponding to the LTE network is invalid or does not exist, resulting in the first terminal call to fail.

Based on the solutions in this embodiment of this application, if the first terminal does not enable the VoNR function, the first terminal enables the VoNR function first, and then sends the network capability message to the core network device to inform the core network device that the first terminal supports the VoNR function. Because the first terminal enables the VoNR function, it is possible to prevent the first terminal from switching to the LTE network, and to ensure that the first terminal calls successfully.

Refer to FIG. 2. A scenario in which a call between the first terminal and the second terminal is abnormal is described, taking the first terminal switching from the 5G network to the LTE network as another example.

Scenario 3: A configuration parameter of an IMS dedicated bearer channel of the LTE network is invalid or does not exist. It should be noted that, in scenario 3, after the first terminal establishes a connection with the 5G communication network, the first terminal determines that the configuration parameter of the IMS default bearer channel corresponding to the LTE network exists and is valid.

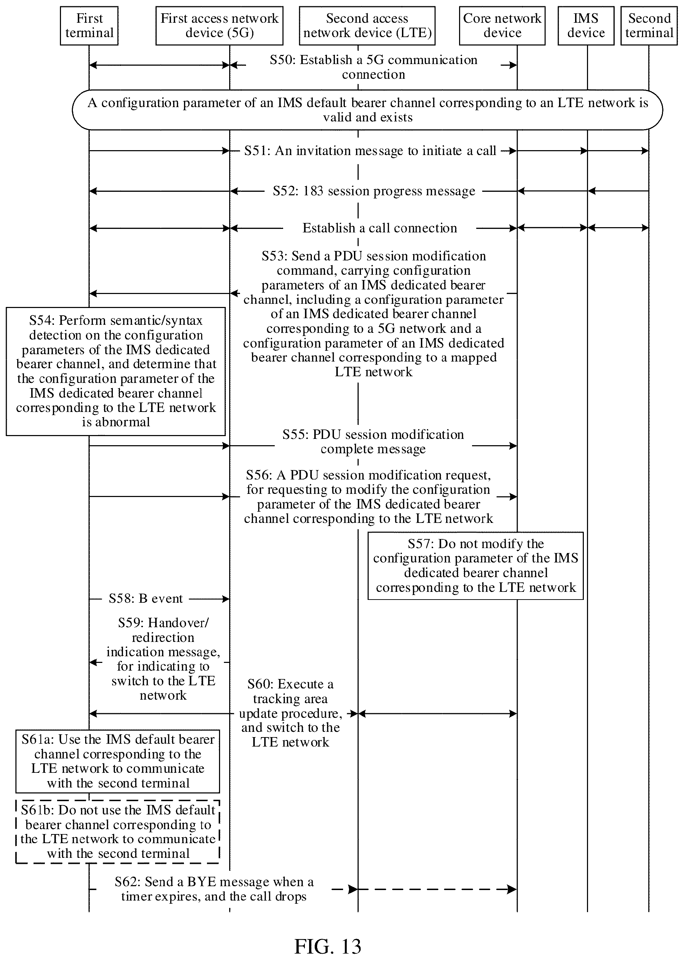

For example, the scenario 3 is illustrated with reference to FIG. 13 in this embodiment of this application.

S50: A first terminal establishes a 5G communication connection with a core network device through a first access network device.

S51: The first terminal sends an invitation message to the second terminal through the network to initiate a call.

S52: The second terminal sends a 183 session progress message to the first terminal through the network.

It should be noted that for the examples of S50 to S52, refer to the examples of S10, S21 and S23 in the above embodiment. Details are not repeat herein again.

S53: The core network device sends a PDU session modification command to the first terminal through the first access network device, carrying configuration parameters of an IMS dedicated bearer channel, including a configuration parameter of an IMS dedicated bearer channel corresponding to a 5G network, and a configuration parameter of an IMS dedicated bearer channel corresponding to a mapped LTE network.

For example, the PDU session modification command may be represented as, a PDU session modification command, PSI#2 map EBI#7, 5QI/QCI=1.

S54: The first terminal performs semantic/syntax detection on the configuration parameters of the IMS dedicated bearer channel, and determines that the configuration parameter of the IMS dedicated bearer channel corresponding to the LTE network is abnormal.

S55: The first terminal sends a PDU session modification complete message to the core network device through the first access network device.

S56: The first terminal sends a PDU session modification request to the core network device through the first access network device for requesting to modify the configuration parameter of the IMS dedicated bearer channel corresponding to the LTE network.

S57: The core network device does not modify the configuration parameter of the IMS dedicated bearer channel corresponding to the LTE network.

S58: The first terminal reports a B event to the first access network device.

S59: The first access network device sends a handover/redirection indication message to the first terminal, for indicating to switch to the LTE network.

S60: The first terminal executes a tracking area update procedure, and switches to the LTE network.

S61a: The first terminal uses the IMS default bearer channel corresponding to the LTE network to communicate with the second terminal.

It may be understood that because the IMS default bearer channel is used for transmitting signalling during a call and a call process, when the first terminal uses the IMS default bearer channel corresponding to the LTE network to make a call with the second terminal, there is a high probability that the call is silent. The silent call means that the first terminal and the second terminal cannot hear each other's voice during the call.

S61b: The first terminal does not use the IMS default bearer channel corresponding to the LTE network to communicate with the second terminal.

S62: The first terminal sends a BYE message to the core network device through the second access network device when a timer expires, and the call drops.

For example, if the first terminal does not use the IMS default bearer channel corresponding to the LTE network to communicate with the second terminal, the first terminal can use a quality of service (quality of service, QoS) technology to start the timer. When the timer expires, the first terminal sends a call BYE message to the core network device through the second access network device. The BYE message carries a reason value "cancel with media beare loss", and the BYE message indicates that the call between the first terminal and the second terminal is abnormal. Then, after receiving the BYE message, the core network device ends the call between the first terminal and the second terminal, that is, the call drops.

It should be noted that scenarios 1 to 3 above list the scenarios in which the first terminal switches from the 5G network to the LTE network, and the configuration parameters of the bearer channel corresponding to the LTE network are invalid or do not exist, resulting in abnormal calls. The following describes a scenario in which the first terminal switches from the LTE network to the 5G network and the configuration parameter of the bearer channel corresponding to the 5G network is invalid or does not exist, resulting in an abnormal call.

Scenario 4: A configuration parameter of an IMS dedicated bearer channel of the 5G network is invalid or does not exist.

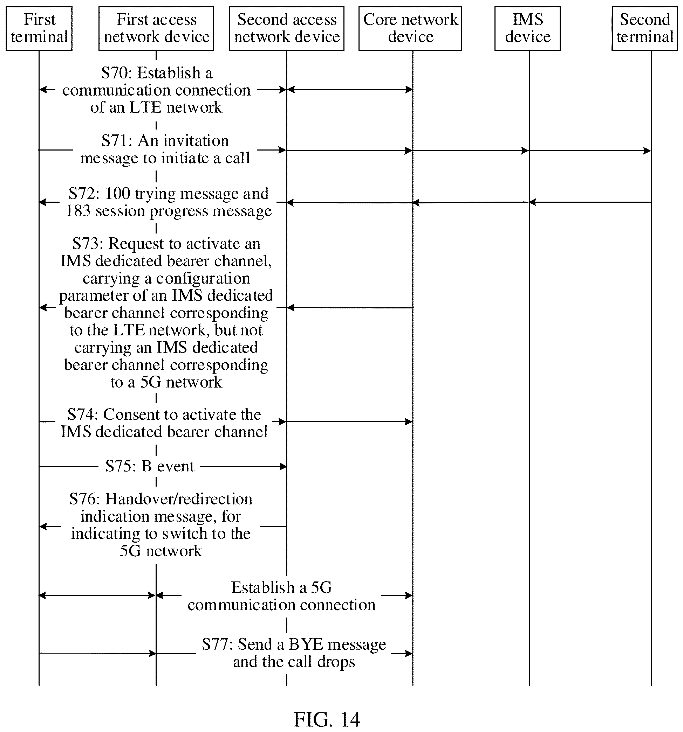

For example, the scenario 4 is illustrated with reference to FIG. 14 in this embodiment of this application.

S70: A first terminal establishes a communication connection of an LTE network with a core network device through a second access network device.

For example, the first terminal can establish the communication connection of the LTE network with the core network device through an attach (attach) procedure. For an example of the attach procedure, refer to the above embodiment, which is not be detailed here.

S71: The first terminal sends an invitation message to the second terminal through the network to initiate a call.

For example, the first terminal may send an invitation message to the second terminal through the second access network device, the core network device, and an IMS device.

S72: The second terminal sends a 183 session progress message to the first terminal through the network.

S73: The core network device sends a request to the first terminal to activate an IMS dedicated bearer channel through the second access network device, carrying a configuration parameter of an IMS dedicated bearer channel corresponding to the LTE network, but not carrying a configuration parameter of an IMS dedicated bearer channel corresponding to the 5G network.

For example, the request to activate the IMS dedicated bearer channel may be expressed as, for example, EBI = 7, QCI = 1, without PCO or ePCO.

In some embodiments, because PCO or ePCO is not configured in the request to activate the IMS dedicated bearer channel, that is, a configuration parameter of 5QI = 1 corresponding to the 5G network is not configured, after the first terminal receives the request to activate the IMS dedicated bearer channel sent by the core network device, the configuration parameter of the IMS dedicated bearer channel corresponding to the 5G network is marked as "EBI # 7 mark as non-transferable".

S74: The first terminal sends a consent to activate the IMS dedicated bearer channel to the core network device through the second access network device.

S75: The first terminal reports a B event to the second access network device.

For example, the B event indicates that signal quality of the 5G network is higher than signal quality of a 4G network.

S76: The second access network device sends a handover/redirection indication message to the first terminal, for indicating to switch to the 5G network.

For example, as shown in FIG. 14, after the first terminal receives the handover/redirection indication message sent by the second access network device, the first terminal accesses the 5G network, that is, the first terminal establishes a 5G communication connection with the core network device through the first access network device. Therefore, during the call process between the first terminal and the second terminal, after the first terminal switches to the 5G network, the configuration parameter of the IMS dedicated bearer channel corresponding to the 5G network is invalid or does not exist, resulting in that the call between the first terminal and the second terminal drops.

S77: The first terminal sends a BYE message to the core network device through the first access network device, and the call drops.

For example, as shown in FIG. 14, the first terminal sends a call BYE message to the core network device through the first access network device. The BYE message carries a reason value "cancel with media beare loss", and the BYE message indicates that the call between the first terminal and the second terminal is abnormal. Then, after receiving the BYE message, the core network device ends the call between the first terminal and the second terminal, that is, the call between the first terminal and the second terminal drops.

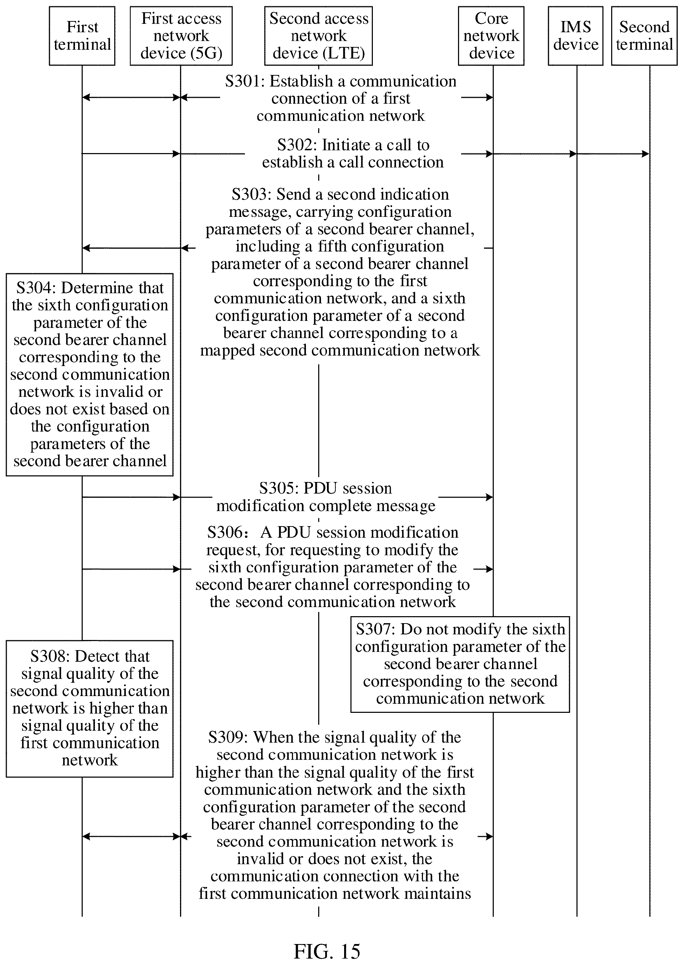

Embodiments of this application further provide a call method that can solve the problem of silent calls or dropped calls in the above scenarios 3 and 4. An example in which the above-described terminal is a first terminal and the first terminal switches from the 5G network to the LTE network is used to illustrate a call method in this embodiment of this application. For example, as shown in FIG. 15, the call method may include the following steps.

S301: A first terminal establishes a communication connection of a first communication network to a core network device through a first access network device.

S302: The first terminal initiates a call to a second terminal to establish a call connection.

For example, the first terminal may send an invitation message to the second terminal to invite the second terminal to make a call. Then, the second terminal sends a 100 trying message and a 183 session progress message to the first terminal. After the second terminal accepts the invitation message of the first terminal, the first terminal establishes a call connection with the second terminal.

S303: The core network device sends a second indication message to the first terminal through the first access network device, carrying configuration parameters of a second bearer channel, including a fifth configuration parameter of a second bearer channel corresponding to the first communication network, and a sixth configuration parameter of a second bearer channel corresponding to a mapped second communication network.

For example, the second indication message may be the PDU session modification command in scenario 3; or the request to activate the IMS dedicated bearer in scenario 4. The first bearer channel may be, for example, the IMS dedicated bearer channel, and the configuration parameter of the first bearer channel may be, for example, the configuration parameter of the IMS dedicated bearer channel carried in the PDU session modification command; or the configuration parameter of the IMS dedicated bearer channel carried in the request to activate the IMS dedicated bearer.

S304: The first terminal determines that the sixth configuration parameter of the second bearer channel corresponding to the second communication network is invalid or does not exist based on the configuration parameters of the second bearer channel.

For example, the first terminal performs semantic/syntax detection on the configuration parameter of the first bearer channel. If the sixth configuration parameter of the second bearer channel corresponding to the second communication network is abnormal, the first terminal determines that the sixth configuration parameter of the second bearer channel corresponding to the second communication network is invalid or does not exist.

S305: The first terminal sends a PDU session modification complete message to the core network device through the first access network device.

S306: The first terminal sends a PDU session modification request to the core network device through the first access network device for requesting to modify the sixth configuration parameter of the second bearer channel corresponding to the second communication network.

S307: The core network device does not modify the sixth configuration parameter of the second bearer channel corresponding to the second communication network.

S308: The first terminal detects that signal quality of the second communication network is higher than signal quality of the first communication network.

S309: When the signal quality of the second communication network is higher than the signal quality of the first communication network and the sixth configuration parameter of the second bearer channel corresponding to the second communication network is invalid or does not exist, the communication connection with the first communication network maintains.

It may be understood that, in a related technology, if the first terminal detects that the signal quality of the LTE network is higher than that of the 5G network, the first terminal switches to the LTE network. In some embodiments, the first terminal may use the IMS default bearer channel to talk with the second terminal, and because the IMS default bearer channel is used to transmit signalling between the first terminal and the second terminal during a call or conversation, there is a high probability that the call between the first terminal and the second terminal is silent. In some other embodiments, during the call process between the first terminal and the second terminal, after the first terminal switches to the LTE network, the IMS dedicated bearer channel corresponding to the LTE network is invalid or does not exist, resulting in that the call between the first terminal and the second terminal drops.

In conclusion, in the solutions in embodiments of this application, when signal quality of a second communication network is higher than signal quality of a first communication network and a sixth configuration parameter of a second bearer channel corresponding to the second communication network is invalid or does not exist, a communication connection with the first communication network maintains, to prevent from switching to the second communication network to prevent the call from dropping between the first terminal and the second terminal and the call is silent.

It should be noted that, in the embodiment shown in FIG. 15, for the example of the first terminal maintaining the communication connection of the first communication network, refer to the example of S2091 or S209a to S209c in the above embodiment. Details are not repeated herein.

In addition, after the call between the first terminal and the second terminal ends, the first terminal may initiate initial registration with the core network device through the first access network device to re-establish a configuration parameter of the second bearer channel, and the specific implementation can refer to the example of S214 or S214A in the above embodiment. Details are not repeated herein.

In this embodiment of this application, an example in which the first terminal switches from a 5G network to an LTE network is used for description. The specific implementation of the first terminal switching from the LTE network to the 5G network is similar to that of the above-described embodiment. The description of the above-described embodiment can be referred to as an example. Details are not repeated herein.

In addition, this embodiment of this application takes the first terminal as a calling terminal as an example. Certainly, the second terminal has a same technical problem as a called terminal with the first terminal, and the technical solution can also be used to solve the technical problem. The specific implementation can refer to the above embodiment, and details are not repeated herein.

It should be noted that the content recorded in embodiments of this application can explain and describe technical solutions in other embodiments of this application. The technical features recorded in the embodiments may also be applied to other embodiments, and may be combined with technical features in other embodiments to form a new solution. In this application, the several illustrative embodiments are merely examples for description, and are not intended to constitute a limitation on this application.

An embodiment of this application provides a terminal, and the terminal may be the first terminal or the second terminal. The terminal may include a memory and one or more processors. The memory stores computer program code. The computer program code includes computer instructions. When the computer instructions are executed by the processor, an electronic device is enabled to perform the various functions or steps performed by the first terminal in the foregoing embodiments. For the structure of the terminal, refer to a structure of the terminal 100.

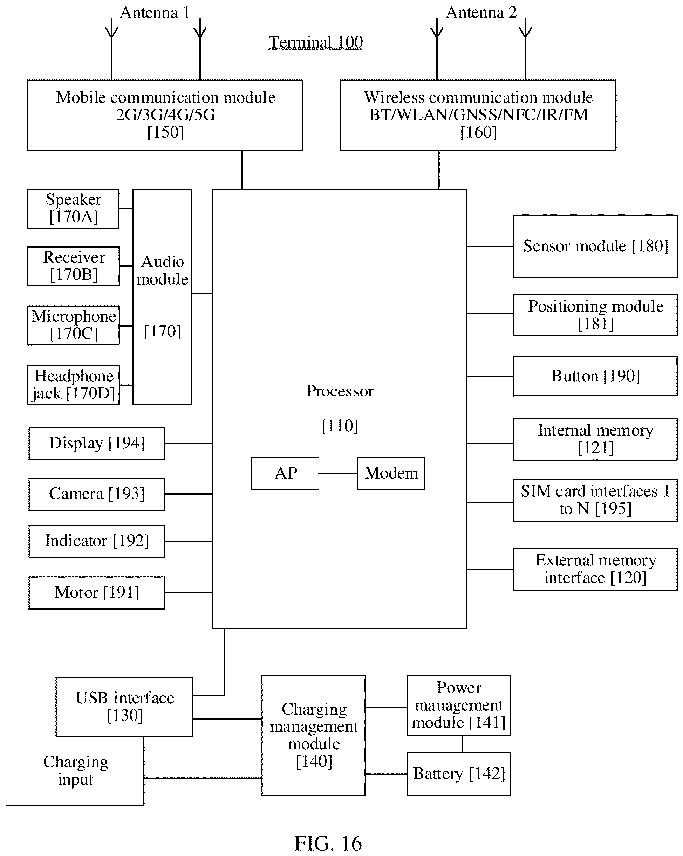

FIG. 16 is a diagram of a structure of a terminal 100 according to an embodiment of this application. The terminal 100 may be the first terminal 10 or the second terminal 20. The terminal 100 is connected to the communication system and has a wireless sending and receiving function or a chip (system) or another component or component that can be arranged on the terminal. The terminal 100 may also be referred to as user equipment, an access terminal, a user unit, a user station, a mobile station, a mobile console, a remote station, a remote terminal, a mobile device, a user terminal, a terminal, a wireless communications device, a user proxy, or a user apparatus. The terminal 100 in this embodiment of this application may be a mobile phone, a tablet computer, a smart watch, a desktop computer, a laptop computer, a handheld computer, a notebook computer, a vehicle-mounted device, an ultra-mobile personal computer (ultra-mobile personal computer, UMPC), a netbook, a cellular phone, a personal digital assistant (personal digital assistant, PDA), an augmented reality (augmented reality, AR)/virtual reality (virtual reality, VR) device, or the like. A specific form of the terminal 100 is not specifically limited in embodiments of this application.

As shown in FIG. 16, the terminal 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a positioning module 181, a button 190, a motor 191, an indicator 192, a camera 193, a display 194, a subscriber identification module (subscriber identification module, SIM) card interface 195, and the like.

It may be understood that the schematic structure in this embodiment constitutes no specific limitation on the terminal 100. In some other embodiments, the terminal 100 may include more or fewer components than those shown in the figure, some components may be combined, some components may be split, or different component arrangements may be used. The components in the figure may be implemented by hardware, software, or a combination of software and hardware.

The processor 110 may include one or more processing units. For example, the processor 110 may include an application processor (application processor, AP), a modem processor (Modem), a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU), and the like. Different processing units may be separate devices, or may be integrated into one or more processors.

The controller may be a nerve center and a command center of the terminal 100. The controller may generate an operation control signal according to instruction operation code and a timing signal, and control obtaining and executing of instructions.

A memory may also be disposed in the processor 110, and is configured to store instructions and data. In some embodiments, the memory of the processor 110 is a cache. The memory may store instructions or data that is just used or used cyclically by the processor 110. If the processor 110 needs to use the instructions or the data again, the processor 110 may directly invoke the instructions or the data from the memory. This avoids repeated accessing and reduces waiting time of the processor 110, thereby improving system efficiency.

In some embodiments, the processor 110 may include one or more interfaces. It may be understood that the interface connection relationship between the modules shown in this embodiment is merely an example, and does not constitute a limitation on the structure of the terminal 100. In some other embodiments, the terminal 100 may alternatively use an interface connection manner different from that in the foregoing embodiment, or use a combination of a plurality of interface connection manners.

The charging management module 140 is configured to receive charging input from the charger. The charger may be a wireless charger or a wired charger. While charging the battery 142, the charging management module 140 may also supply power to the electronic device through the power management module 141.

The power management module 141 is configured to connect to the battery 142, the charging management module 140 and the processor 110. The power management module 141 receives an input from the battery 142 and/or the charging management module 140 and supplies power to the processor 110, the internal memory 121, an external memory, the display screen 194, the camera 193, the wireless communication module 160, and the like.

A wireless communications function of the terminal 100 may be implemented by using the antenna 1, the antenna 2, the mobile communications module 150, the wireless communications module 160, the modem processor, the baseband processor, and the like.

The terminal 100 implements a display function by using the GPU, the display 194, the application processor, and the like. The GPU is a microprocessor for image processing and connects the display 194 to the application processor. The GPU is configured to perform mathematical and geometric computing for graphics rendering. The processor 110 may include one or more GPUs, and the one or more GPUs execute program instructions to generate or change displayed information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light emitting diode, AMOLED), a flex light-emitting diode (flex light-emitting diode, FLED), a mini-LED, a micro-OLED, a micro-OLED, a quantum dot light-emitting diode (quantum dot light emitting diodes, QLED), or the like.

The terminal 100 can implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal. The photosensitive element of the camera lens transmits the electrical signal to the ISP for processing, so that the ISP converts the electrical signal into an image visible to naked eyes. The ISP may further perform algorithm optimization on noise, brightness, and a color of the image. The ISP may further optimize parameters such as exposure and a color temperature of a shooting scenario. In some embodiments, the ISP may be provided in the camera 193.

The camera 193 is configured to capture a still image or video. An optical image of an object is captured through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV.

The digital signal processor is configured to process a digital signal, and may further process another digital signal in addition to the digital image signal. For example, when the electronic device selects a frequency, the digital signal processor is configured to perform Fourier transform or the like on frequency energy.

The video encoder and decoder are configured to compress or decompress a digital video. The terminal 100 may support one or more types of video codecs. In this way, the electronic device may play or record videos in a plurality of coding formats, for example, moving picture experts group (moving picture experts group, MPEG) 1, MPEG 2, MPEG 3, and MPEG 4.

The NPU is a neural-network (neural-network, NN) computing processor. The NPU quickly processes input information by referring to a structure of a biological neural network, for example, a transfer mode between human brain neurons, and may further continuously perform self-learning. By using the NPU, intelligent cognition and another application of the electronic device, such as image recognition, facial recognition, voice recognition, and text understanding, can be implemented.

The terminal 100 may implement an audio function, for example, music playing or recording, by using the audio module 170, the speaker 170A, the receiver 170B, the microphone 170C, the headset jack 170D, the application processor.

The audio module 170 is configured to convert digital audio information into an analog audio signal output, and also configured to convert an analog audio input into a digital audio signal. The audio module 170 may further be configured to encode and decode audio signals. The speaker 170A, also referred to as "horn", is configured to convert an electrical audio signal into a sound signal. The receiver 170B, also referred to as "earpiece", is configured to convert an electrical audio signal into a sound signal. The microphone 170C, also referred to as a "mic" or a "mike", is configured to convert a sound signal into an electrical signal. The headset jack 170D is configured to connect to a wired headset.

The external memory interface 120 may be configured to connect to an external storage card such as a micro SD card, to expand a storage capability of the electronic device. The external storage card communicates with the processor 110 via the external memory interface 120, to implement a data storage function. For example, files such as audio and videos are stored in the external storage card.

The internal memory 121 may be configured to store computer-executable program code, and the computer-executable program code includes instructions. The processor 110 runs the instructions stored in the internal memory 121, to implement various functional applications and data processing of the electronic device. For example, in this embodiment of this application, the processor 110 may execute the instructions stored in the internal memory 121. The internal memory 121 may include a program storage area and a data storage area.

The program storage region may store an operating system, an application required by at least one function (for example, a voice playing function and an image playing function), and the like. The data storage region may store data (for example, audio data and a phone book) created during use of the electronic device, and the like. In addition, the internal memory 121 may include a high-speed random access memory, and may further include a non-volatile memory, for example, at least one magnetic disk storage device, a flash memory device, or a universal flash storage (universal flash storage, UFS).

For example, the processor 110 may run computer executable program code stored in the internal memory 121, where the computer executable program code includes instructions. The processor 110 executes various functional applications and data processing of the terminal by executing the instructions. For example, in this embodiment of this application, the AP in the processor 110 executes corresponding steps by executing the instructions stored in the internal memory, and sends a message to a network side through a modem.

The button 190 includes a power on/off button, a volume button, and the like. The motor 191 may be configured to provide a vibration prompt for an incoming call, and may be further configured to provide vibration feedback for a touch. The indicator 192 may be an indicator light that may be configured to indicate a charging state and a power change, or may further be configured to indicate a message, a missed call, a notification, and the like.

The SIM card interface 195 is configured to connect a SIM card. The SIM card may be inserted into the SIM card interface 195 or removed from the SIM card interface 195, to be in contact with or be separated from the electronic device. The electronic device may support one or N SIM card interfaces, where N is a positive integer greater than 1. The SIM card interface 195 may support a nano SIM card, a micro SIM card, a SIM card, or the like. A plurality of cards may be inserted into the same SIM card interface 195 together. The plurality of cards may be of a same type or may be of different types. The SIM card interface 195 may further be compatible with different types of SIM cards. The SIM card interface 195 is also compatible with an external memory card. The terminal 100 interacts with a network by using the SIM card, to implement a call function, a data communication function, and the like. In some embodiments, the terminal 100 uses an eSIM card, that is, an embedded SIM card. The eSIM card may be embedded in the terminal 100, and cannot be separated from the terminal 100.

In addition, an operating system, for example, an iOS operating system, and an Android operating system, still runs on the foregoing components in the terminal 100. An application may be installed and run on this operating system.

A software system of the terminal 100 may use a layered architecture, an event-driven architecture, a microkernel architecture, a micro service architecture, a cloud architecture, or the like. This embodiment of this application describes a software architecture of the terminal 100 by using an Android system with a layered architecture as an example.

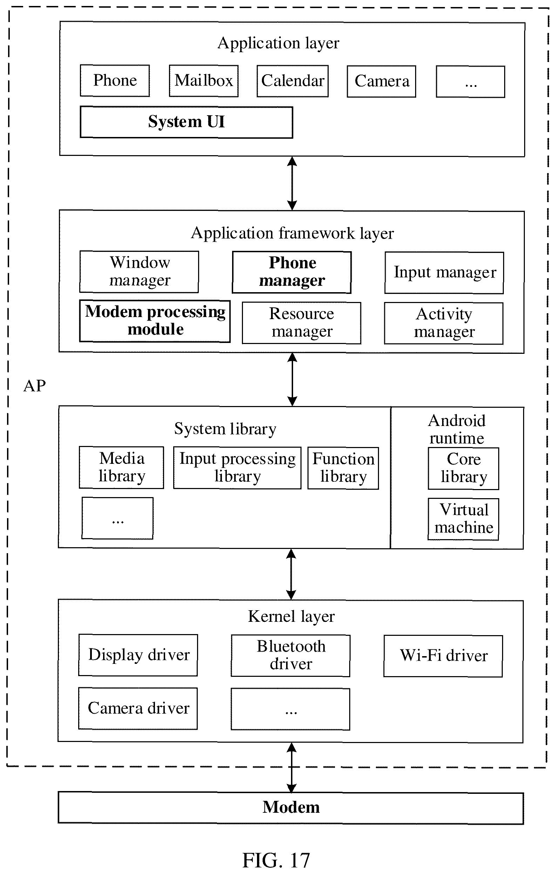

FIG. 17 is a block diagram of a software structure of a terminal according to an embodiment of this application.

In a layered architecture, software is divided into several layers, and each layer has a clear role and task. The layers communicate with each other through software interfaces. In some embodiments, the Android system is divided into five layers that are respectively an application layer, an application program framework layer, an Android runtime (Android runtime) and a system library, and a kernel layer from top to bottom.

The application layer may include a series of application packages.

As shown in FIG. 17, the application program package may include application programs such as phone, mail, calendar, and camera. The application layer may further include a system UI (system UI), and the system UI is used for displaying an interface of the terminal, such as displaying a signal icon corresponding to a SIM card, displaying a call interface, and the like. For example, the system UI may be used to display interfaces as shown in (a), (b), and (c) in FIG. 4.

The application framework layer provides an application programming interface (application programming interface, API) and a programming framework for the applications at the application layer. The application framework layer includes some predefined functions.

As shown in FIG. 17, the application framework layer may include a window manager, an input manager, an activity manager, a resource manager, a phone manager, and the like. The window manager is configured to manage a window program. The window manager may obtain a size of a display, determine whether a status bar exists, lock a screen, take a screenshot, and the like. The input manager is configured to manage an application of an input device. For example, the input system may determine input operations such as a mouse click operation, a keyboard input operation and touch sliding. The activity manager is configured to manage a lifecycle of each application and a navigation rollback function, and is responsible for main thread creation for Android and maintenance of the lifecycle of each application. The resource manager provides various resources such as a localized character string, an icon, a picture, a layout file, and a video file for the application.

The phone manager is configured to provide a call function of the terminal, for example, management of a call status (including answering or declining). The application framework layer HIA may include a radio interface layer (radio interface layer, RIL) through which the modem may interact with the phone manager for information.

The application framework layer also includes a modem processing module. In this embodiment of this application, the modem processing module is configured to perform each step performed by the first terminal in the above embodiment, such as S4 shown in FIG. 2, S12 and S17 in FIG. 3, S31 in FIG. 5, S203 and S208 in FIG. 6, S209c in FIG. 8, S215 in FIG. 10, S215a in FIG. 11, S220 and S221 in FIG. 12, S54, S61a and S61b in FIG. 13, and S304 and S308 in FIG. 15.

In addition, the modem processing module is also used to send messages to networks (such as an access network device, a core network device and an IMS device) through the modem.

The Android runtime includes a core library and a virtual machine. The Android runtime is responsible for scheduling and management of an Android system.

The kernel library includes two parts: One part is a performance function that needs to be invoked in a Java language, and the other part is a kernel library of Android.

The application layer and the application framework layer run in the virtual machine. The virtual machine executes Java files of the application layer and the application framework layer as binary files. The virtual machine is configured to implement functions such as object lifecycle management, stack management, thread management, security and exception management, and garbage collection.

The system libraries may include a plurality of functional modules. For example, a function library, a media library and an input processing library. The function library provides macros, type definitions, string manipulation functions, mathematical computation functions, input and output functions, and the like used in C language. The media library supports playback and recording in a plurality of commonly used audio and video formats, static image files, and the like. The media library may support a plurality of audio and video encoding formats such as MPEG 4, H.264, MP3, AAC, AMR, JPG, and PNG. The input processing library is configured to process a library of an input device, which can realize mouse, keyboard and touch input processing, and the like.

The kernel layer is a layer between hardware and software. The kernel layer includes at least a display driver, a Bluetooth driver, a Wi-Fi driver, and a camera driver.

In this embodiment of this application, the modem (Modem) in the terminal may report messages (such as a PDU session modification command, a handover/redirection indication message) sent by a network side to the AP. Accordingly, the modem processing module in the terminal may alternatively send messages (such as a PDU session modification complete message, a B event) to the network side.

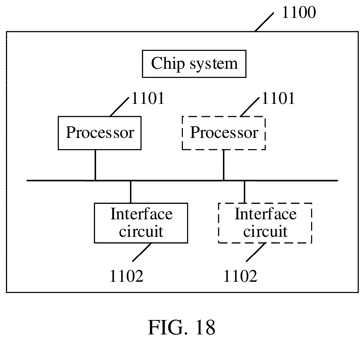

An embodiment of this application further provides a chip system. As shown in FIG. 18, a chip system 1100 includes at least one processor 1101 and at least one interface circuit 1102. The processor 1101 may be the processor 110 shown in FIG. 16 in the foregoing embodiments. The interface circuit 1102 may be, for example, an interface circuit between the processor 110 and an external memory, or may be an interface circuit between the processor and the internal memory 121.

The processor 1101 may be connected to the interface circuit 1102 through a line. For example, the interface circuit 1102 may be configured to receive a signal from another apparatus (for example, a memory of the mobile phone 100). In another example, the interface circuit 1102 may be configured to transmit a signal to another apparatus (for example, the processor 1101). For example, the interface circuit 1102 may read an instruction stored in a memory and transmit the instruction to the processor 1101. When the instructions are executed by the processor 1101, the terminal is enabled to perform the steps in the foregoing first terminal. Certainly, the chip system may further include another discrete device. This is not specifically limited in embodiments of this application.

An embodiment of this application further provides a computer-readable storage medium. The computer-readable storage medium includes computer instructions. The computer instructions, when run on the foregoing terminal, cause the terminal to perform the functions or steps performed by the first terminal in the foregoing method embodiments.

An embodiment of this application further provides a computer program product. When the computer program product is run on a computer, the computer is enabled to perform the functions or the steps performed by the first terminal in the foregoing method embodiments.

Based on the foregoing descriptions of the implementations, a person skilled in the art may clearly understand that for a purpose of convenient and brief descriptions, division of the foregoing functional modules is merely used as an example for description. During actual application, the foregoing functions can be allocated to different functional modules for implementation according to a requirement, that is, an inner structure of an apparatus is divided into different functional modules, to implement all or some of the functions described above.

In several embodiments provided in this application, it should be understood that the disclosed apparatus and method may be implemented in other manners. For example, the foregoing described apparatus embodiment is merely an example. For example, division of the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between apparatuses or units may be implemented in electronic, mechanical, or another form.

The units described as separate parts may or may not be physically separate, and parts displayed as units may be one or more physical units, that is, may be located in one place, or may be distributed in a plurality of different places. Some or all of the units may be selected according to actual requirements to achieve the objectives of the solutions of embodiments.

In addition, functional units in embodiments of this application may be integrated into one processing unit, each of the units may exist alone physically, or two or more units may be integrated into one unit. The foregoing integrated unit may be implemented in a form of hardware, or may be implemented in a form of software functional unit.

When the integrated unit is implemented in the form of software functional unit and sold or used as an independent product, the integrated unit may be stored in a readable storage medium. Based on such an understanding, the technical solutions of embodiments of this application essentially, or the part contributing to the current technology, or all or some of the technical solutions may be implemented in a form of software product. The software product is stored in a storage medium and includes several instructions for instructing a device (which may be a single-chip microcomputer, a chip, or the like) or a processor (processor) to perform all or some of steps of methods in embodiments of this application. The foregoing storage medium includes any medium that can store program code, for example, a USB flash drive, a removable hard disk, a read-only memory (read only memory, ROM), a random access memory (random access memory, RAM), a magnetic disk, or an optical disc.

The foregoing content is merely specific implementations of this application, but are not intended to limit the protection scope of this application. Any variation or replacement within the technical scope disclosed in this application shall fall within the protection scope of this application. Therefore, the protection scope of this application should be subject to the protection scope of the claims.

## Claims

1. A call method, wherein the call method comprises:
a first terminal being connected to a first network device through a first communication network;
receiving, by the first terminal, a first indication message sent by the first network device, wherein the first indication message comprises a first target configuration parameter of a first bearer channel, and the first bearer channel is used for transmitting signalling between the first terminal and a second terminal during a call or in a call process;
the first target configuration parameter of the first bearer channel comprises a first configuration parameter of a first bearer channel corresponding to the first communication network, and the first terminal uses the first configuration parameter of the first bearer channel corresponding to the first communication network to establish a call connection with the second terminal; and
maintaining, by the first terminal, a connection with the first communication network through the first network device when signal quality of the second communication network is higher than signal quality of the first communication network and a second configuration parameter of a first bearer channel corresponding to the second communication network is invalid or does not exist during the call process between the first terminal and the second terminal, wherein
that a second configuration parameter of a first bearer channel corresponding to the second communication network is invalid comprises: the first target configuration parameter of the first bearer channel comprises a second configuration parameter of a first bearer channel corresponding to a mapped second communication network and the second configuration parameter is invalid; and
that a second configuration parameter of a first bearer channel corresponding to the second communication network does not exist comprises: the first target configuration parameter of the first bearer channel does not comprise a second configuration parameter of a first bearer channel corresponding to a mapped second communication network.

2. The call method according to claim 1, wherein the maintaining, by the first terminal, a connection with the first communication network through the first network device comprises:
refraining, by the first terminal, from reporting a measurement event to the first network device, and maintaining the connection with the first communication network through the first network device, wherein the measurement event indicates that the signal quality of the second communication network is higher than the signal quality of the first communication network; or
reporting, by the first terminal, the measurement event to the first network device; receiving, by the first terminal, a handover/redirection indication message from the first network device, wherein the handover/redirection indication message indicates the first terminal to switch/redirect to the second communication network; and ignoring, by the first terminal, the handover/redirection indication message and maintaining the connection with the first communication network through the first network device.

3. The call method according to claim 1 or 2, wherein before the first terminal calls the second terminal for a call, the call method further comprises:
sending, by the first terminal, a first release request to the first network device, wherein the first release request is used for deleting the first target configuration parameter of the first bearer channel;
sending, by the first terminal, a first request to the first network device, wherein the first request is used for requesting to obtain a second target configuration parameter of the first bearer channel; and
the maintaining, by the first terminal, a connection with the first communication network through the first network device when the signal quality of the second communication network is higher than the signal quality of the first communication network and the second configuration parameter of the first bearer channel corresponding to the second communication network is invalid or does not exist comprises:
if the first terminal does not obtain the second target configuration parameter of the first bearer channel, during the call process between the first terminal and the second terminal, when the signal quality of the second communication network is higher than the signal quality of the first communication network and the second configuration parameter of the first bearer channel corresponding to the second communication network is invalid or does not exist, maintaining, by the first terminal, the connection with the first communication network through the first network device.

4. The call method according to claim 3, wherein if the first terminal obtains the second target configuration parameter of the first bearer channel, the call method further comprises:
the second target configuration parameter of the first bearer channel comprises a third configuration parameter of the first bearer channel corresponding to the first communication network, and the first terminal uses the third configuration parameter of the first bearer channel corresponding to the first communication network to establish the call connection with the second terminal; and
storing, by the first terminal, the connection with the first communication network through the first network device when signal quality of the second communication network is higher than signal quality of the first communication network and a fourth configuration parameter of a first bearer channel corresponding to the second communication network is invalid or does not exist during the call process between the first terminal and the second terminal, wherein
that a second target configuration parameter of a first bearer channel corresponding to the second communication network is invalid comprises: the second target configuration parameter of the first bearer channel comprises a fourth configuration parameter of the first bearer channel corresponding to the mapped second communication network and the fourth configuration parameter is invalid; and
that a configuration parameter of a first bearer channel corresponding to the second communication network does not exist comprises: the second target configuration parameter of the first bearer channel does not comprise a fourth configuration parameter of the first bearer channel corresponding to the mapped second communication network.

5. The call method according to claim 3 or 4, wherein if the first terminal does not obtain the second target configuration parameter of the first bearer channel, comprising:
refraining, by the first terminal, from sending the first request to the first network device; or
sending, by the first terminal, the first request to the first network device and before the first terminal initiates a call to the second terminal, a first accept message sent by the first network device is not received, and the first accept message comprises the second target configuration parameter of the first bearer channel.

6. The call method according to any one of claims 1 to 5, wherein the call method further comprises:
after the call between the first terminal and the second terminal ends, re-establishing, by the first terminal, a connection with the first communication network through the first network device, and re-establishing a configuration parameter of the first bearer channel.

7. The call method according to any one of claims 1 to 6, wherein the first communication network is a 5G network, the second communication network is a long-term evolved LTE network; and before the first terminal calls the second terminal, the call method further comprises:
if the first terminal does not enable a voice over new radio VoNR function, enabling, by the first terminal, the VoNR function and sending a network capability message to the first communication network, wherein the network capability message indicates that the first terminal supports the VoNR function; and
calling, by the first terminal, the second terminal by using a VoNR technology.

8. The call method according to claim 7, wherein that the first terminal uses the first configuration parameter of the first bearer channel corresponding to the first communication network to establish the call connection with the second terminal comprises:
using, by the first terminal, the first configuration parameter of the first bearer channel corresponding to the first communication network to establish the call connection with the second terminal when the VoNR function enables.

9. The call method according to any one of claims 1 to 8, wherein
the first indication message is a PDU session modification command.

10. The call method according to any one of claims 1 to 9, wherein
the first bearer channel is an internet protocol multimedia subsystem IMS default bearer channel, and the first target configuration parameter of the first bearer channel comprises one or more of an access point name APN, a data network name DNN, a PDU session ID, an evolved packet system EPS bearer identity, a 5G quality of service identifier, and an LTE quality of service identifier.

11. The call method according to any one of claims 1 to 10, wherein a networking mode of the first network device is stand alone SA.

12. A call method, wherein the call method comprises:
a first terminal being connected to a first network device through a first communication network;
receiving, by the first terminal, a first indication message sent by the first network device, wherein the first indication message comprises a first target configuration parameter of a first bearer channel, and the first bearer channel is used for transmitting signalling between the first terminal and the second terminal during a call or in a call process; and the first target configuration parameter of the first bearer channel comprises a first configuration parameter of a first bearer channel corresponding to the first communication network and a second configuration parameter of a first bearer channel corresponding to a mapped second communication network;
when the second configuration parameter of the first bearer channel corresponding to the second communication network is valid, using, by the first terminal, the first configuration parameter of the first bearer channel corresponding to the first communication network to establish a call connection with the second terminal;
receiving, by the first terminal, a second indication message sent by the first network device, wherein the second indication message comprises a configuration parameter of a second bearer channel, and the second bearer channel is used for transmitting multimedia data between the first terminal and the second terminal during the call process; and
maintaining, by the first terminal, a communication connection with the first communication network through the first network device when signal quality of the second communication network is higher than signal quality of the first communication network and a sixth configuration parameter of a second bearer channel corresponding to the second communication network is invalid or does not exist during the call process between the first terminal and the second terminal, wherein
that a sixth configuration parameter of a second bearer channel corresponding to the second communication network is invalid comprises: configuration parameters of the second bearer channel comprise a fifth configuration parameter of a second bearer channel corresponding to the first communication network and a sixth configuration parameter of a second bearer channel corresponding to a mapped second communication network, and the sixth configuration parameter of the second bearer channel corresponding to the second communication network is invalid; and
that a sixth configuration parameter of a second bearer channel corresponding to the second communication network does not exist comprises: configuration parameters of the second bearer channel comprise the fifth configuration parameter of the second bearer channel corresponding to the first communication network, and do not comprise the sixth configuration parameter of the second bearer channel corresponding to the mapped second communication network.

13. The call method according to claim 12, wherein the maintaining, by the first terminal, a connection with the first communication network through the first network device comprises:
refraining, by the first terminal, from reporting a measurement event to the first network device, and maintaining the connection with the first communication network through the first network device, wherein the measurement event indicates that the signal quality of the second communication network is higher than the signal quality of the first communication network; or
reporting, by the first terminal, the measurement event to the first network device; receiving, by the first terminal, a handover/redirection indication message from the first network device, wherein the handover/redirection indication message indicates the first terminal to switch/redirect to the second communication network; and ignoring, by the first terminal, the handover/redirection indication message and maintaining the connection with the first communication network through the first network device.

14. The call method according to claim 12 or 13, wherein the call method further comprises:
after the call between the first terminal and the second terminal ends, re-establishing, by the first terminal, a connection with the first communication network through the first network device, and re-establishing a configuration parameter of the second bearer channel.

15. The call method according to any one of claims 12 to 14, wherein
the second indication message is a PDU session modification command.

16. A call method, wherein the call method comprises:
a first terminal being connected to a first network device through a first communication network;
receiving, by the first terminal, a first indication message sent by the first network device, wherein the first indication message comprises a first target configuration parameter of a first bearer channel, and the first bearer channel is used for transmitting signalling between the first terminal and a second terminal during a call or in a call process;
when a second configuration parameter of a first bearer channel corresponding to the second communication network is invalid or does not exist, before the first terminal calls the second terminal for a call, obtaining, by the first terminal, a second target configuration parameter of the first bearer channel, wherein the first bearer channel is used for transmitting the signalling of the first terminal and the second terminal during the call or in the call process; and
that a second configuration parameter of a first bearer channel corresponding to the second communication network is invalid comprises: first target configuration parameters of the first bearer channel comprise a first configuration parameter of a first bearer channel corresponding to the first communication network and a second configuration parameter of a first bearer channel corresponding to a mapped second communication network, and the second configuration parameter of the first bearer channel corresponding to the second communication network is invalid; and
that a second configuration parameter of a first bearer channel corresponding to the second communication network does not exist comprises: first target configuration parameters of the first bearer channel comprise a first configuration parameter of a first bearer channel corresponding to the first communication network, and do not comprise a second configuration parameter of a first bearer channel corresponding to the second communication network;
the second target configuration parameter of the first bearer channel comprises a third configuration parameter of the first bearer channel corresponding to the first communication network, and the first terminal uses the third configuration parameter of the first bearer channel corresponding to the first communication network to establish a call connection with the second terminal; and
during the call process between the first terminal and the second terminal, when signal quality of the second communication network is higher than signal quality of the first communication network and a fourth configuration parameter of the first bearer channel corresponding to the second communication network is valid, the first terminal establishes a communication connection with the second communication network through the second network device, wherein
that a fourth configuration parameter of the first bearer channel corresponding to the second communication network is valid comprises: the second target configuration parameter of the first bearer channel comprises a fourth configuration parameter of a first bearer channel corresponding to a mapped second communication network, and the fourth configuration parameter of the first bearer channel corresponding to the second communication network is valid.

17. A terminal, wherein the terminal comprises a memory and one or more processors, wherein
the memory stores computer program code, the computer program code comprises computer instructions, and when the computer instructions are executed by the processor, the terminal is enabled to perform the call method according to any one of claims 1 to 11, or perform the call method according to any one of claims 12 to 15, or perform the call method according to claim 16.

18. A chip system, applied to a terminal, and the chip system comprises: at least one processor and an interface, the reception is used for receiving instructions and transmitting the instructions to the at least one processor; the at least one processor runs the instructions to enable the terminal to perform the call method according to any one of claims 1 to 11, or perform the call method according to any one of claims 12 to 15, or perform the call method according to claim 16.

19. A computer-readable storage medium, comprising computer instructions, and when the computer instructions are run on a terminal, the terminal is enabled to perform the call method according to any one of claims 1 to 11, or perform the call method according to any one of claims 12 to 15, or perform the call method according to claim 16.
